# EUROPEAN PATENT APPLICATION

(11) **EP 0 782 068 A1**
(43) Date of publication of application: **02.07.1997**
(21) Application number: 96309552.6
(22) Date of filing: 30.12.1996
(51) Int. Cl.: G06F 3/12

(54) **Remote printing system**

(30) Priority: 29.12.1995 US 580727
(71) Applicant: Deluxe Corporation, Shoreview, Minnesota 55126-8201 (US)
(72) Inventor: Sperring, Foy C., Bay Shore, New York 11706 (US); Langer, Richard G., Prior Lake, MN 55372 (US); Coronna, Mark S., Vadnar's Heights, MN 55127 (US); Velani, Murad S., Woodbury, MN 55125 (US); O'Neill, David, Warwick, NJ 10990 (US)
(74) Representative: Beck, Simon Antony

(57) **Abstract**

A Desktop Printing System (DPS) operable on a data processor enables the printing of a document created by an application program to be printed at a remotely located printing facility (RPF). The DPS obtains formatting information from the document, and obtains user desired printing and binding preferences, which include paper type, binder type and color, and dividers for separating sections of the document. Cost and tax tables stored on the data processor are utilized to generate cost and tax information for review by the user. The DPS provides several options for transmission of the document and user printing and binding preferences to the RPF. The RPF includes an automated facility for accepting print orders from a plurality of DPSs. Each print order is accepted, validated and stored, and credit information for payment of the print order is obtained. Files required for printers to print a print order are generated and are queued for printing at a selected production plant Upon printing, each print order is finished and shipped to the user.

## Description

### AUTHORIZATION

A portion of the disclosure of this patent document contains material which is subject to copyright protection. The copyright owner has no objection to the facsimile reproduction of anyone of the patent document or the patent disclosure, as it appears in the Patent and Trademark Office patent file or records, but otherwise reserves all copyrights whatsoever.

### FIELD OF THE INVENTION

This invention relates generally to electronic data processing and more particularly, through in its broader aspects not limited to, methods and apparatus for causing the printing of a document generated by computerized apparatus.

### BACKGROUND OF THE INVENTION

A variety of software applications are available which allow the creation of documents such as business presentations or advertisements, scholarly dissertations, newsletters or other types of documents, which contain text, graphical images, charts, tables or combinations thereof. Once created, the documents may be printed by the user of the application at a local printer.

While printers such as those typically found in the home or office environment provide a high quality printed product, such printers are not capable of performing the high quality printing and document binding functions typically available at print shops. Such print shops utilize a variety of specialized equipment for black and white and full color printing as well as other reproduction methods such as thermography, foil stamping, silk screening, embossing and die cutting, as well as document binding. Thus, documents created in most home or office environments must be sent to a remotely located printing facility if printing of a quality higher than that achievable by laser printers or other type of office printing equipment is desired.

One method to send a document to a print shop for printing is to print the document onto paper and then send the printed document together with printing instructions to the print shop. Other, more efficient, ways involve transmission of a document in a machine readable form which may be read directly or indirectly by printing equipment. Transmission of a document in machine readable form may involve transmission of only the raw data to be printed, with any formatting instructions being communicated separately, or may involve the transmission of a document together with formatting instructions contained in the document.

Certain existing systems enable a document to be transmitted electronically either via transmission over a telephone line using a modern, or by storing the document to a magnetic diskette together with formatting codes and information pertaining to printing options. Such systems further simplify the printing of data at a remote facility by automating and simplifying the process of transmitting the data and the formatting information necessary for proper printing. However, such known systems are typically available only for certain specialized application programs rather than the most commonly used document creation programs. Moreover, such systems provide only a limited number of printing options, rather than allowing use of the wide variety of printing and binding options available from a print shop.

Printing facilities which receive orders electronically typically have limited capabilities to automatically process a wide variety of print orders. Typically, such facilities utilize a high level of human intervention to receive the print order, determine from the user the specifics of the print order such as the number of copies, the type and color of paper, the type of binding, if any, and shipping and billing information. Some printing facilities may provide a higher level of automation but only for limited types of print orders. The lack of automation at printing facilities which perform a variety of different printing tasks leads to increased cost and time in fulfilling the requested print order along with the attendant chances of miscommunication and error involved in a manual process.

### SUMMARY OF THE INVENTION

It is an object of the present invention to provide a remote printing system, operable on a data processor, which enables documents created by an application program to be transmitted, along with user desired printing and binding preferences, to a remotely located printing facility which provides a variety of printing and binding options unavailable in a typical home or office environment. It is a further object of the present invention to provide an automated printing facility which efficiently accepts computerized print orders, manages the printing of incoming orders in accordance with computerized printing instructions received with the order, obtains necessary payment and credit authorization information and maintains status information as to the status of the print order.

In accordance with a principle of the present invention, a Desktop Printing System (DPS) is provided to enable the printing of a document created with an application program on a desktop computer at a Remote Printing Facility (RPF). The DPS provides the user with a plurality of options to specify various printing options such as the format of the printed document in order to generate a print order for transmission to the RPF. For example the printed document may take the form of unbound 8.5x11 sheets of paper or may be bound in a number of types of binders. The printed document may also take the form of a postcard, a greeting card, a business card or a poster. The DPS advantageously contains means for the user to enter the number of copies desired, the color and style of the paper, and billing and shipping information. The DPS provides for a number of different payment options for payment by the user of the print order including credit/debit cards and pre-established accounts. Upon entry of the necessary information, the DPS establishes contact with the RPF which obtain the necessary credit authorization information either internally or from external sources and transmits the necessary information to the DPS. Upon receipt of the necessary credit authorization the DPS, upon appropriate command by the user, proceeds to electronically transmit the print order to the RPF. Alternatively, the print order may be transmitted via diskette by overnight delivery to the RPF.

The DPS advantageously provides the user with an easy to use mechanism to create a print order which can be electronically transmitted to a printing facility for printing. A variety of printing options are provided to allow printing of numerous types of printed materials. By facilitating the printing of numerous types of printed materials by high quality printing apparatus the DPS offers significant advantages over known automated systems which restrict the types of printing that may be specified and transmitted electronically. Moreover, by automating the specification of printing options, the DPS described herein reduces the chance of error by those unfamiliar with the details of obtaining a high quality printed product.

In a further aspect of the invention the RPF referred to above takes the form of a highly automated facility which is capable of concurrently accepting print orders from a large number of DPSs. The RPF contains means to accept and verify print orders received from the DPSs and to obtain necessary credit authorization information for payment of the print order prior to receipt of the print order. The RPF also contains an automated facility to accept and process print orders received by diskette. Upon receipt of the print order the RPF decrypts and expands the received files to the extent necessary and controls the routing, printing and shipping of the received order. Prepress operations such as color conversion, trapping, grouping, imposition and color separation are facilitated by the use of automated mechanisms. Once the necessary prepress operations are performed on a print job it is stored in a queue to await printing by an appropriate printer. Upon printing the print job is finished by cutting the paper to the extent necessary and binding and packaging the print job. The print job is then shipped to the user's specified shipping address.

These and other features and advantages of the present invention may be better understood by considering the following detailed description of certain preferred embodiments of the invention. In the course of this description, reference will be made to the attached drawings.

### BRIEF DESCRIPTION OF THE DRAWINGS

Fig. 1 is a schematic illustration of a system embodying the principles of the invention.
Fig. 2 is a block diagram of a portion of the system shown in Fig. 1;
Figs 3, 4, 5, 5(a), 5(b), 6, 7(a), 7(b) and 8 are flowcharts showing the operation of a preferred portion of the system shown in Fig. 1;
Fig. 9 is a block diagram of a portion of the system shown in Fig. 1; and
Fig. 10 is a block diagram showing in greater detail the components of a portion of the system of Fig. 9.

### DETAILED DESCRIPTION

### 1. System Overview

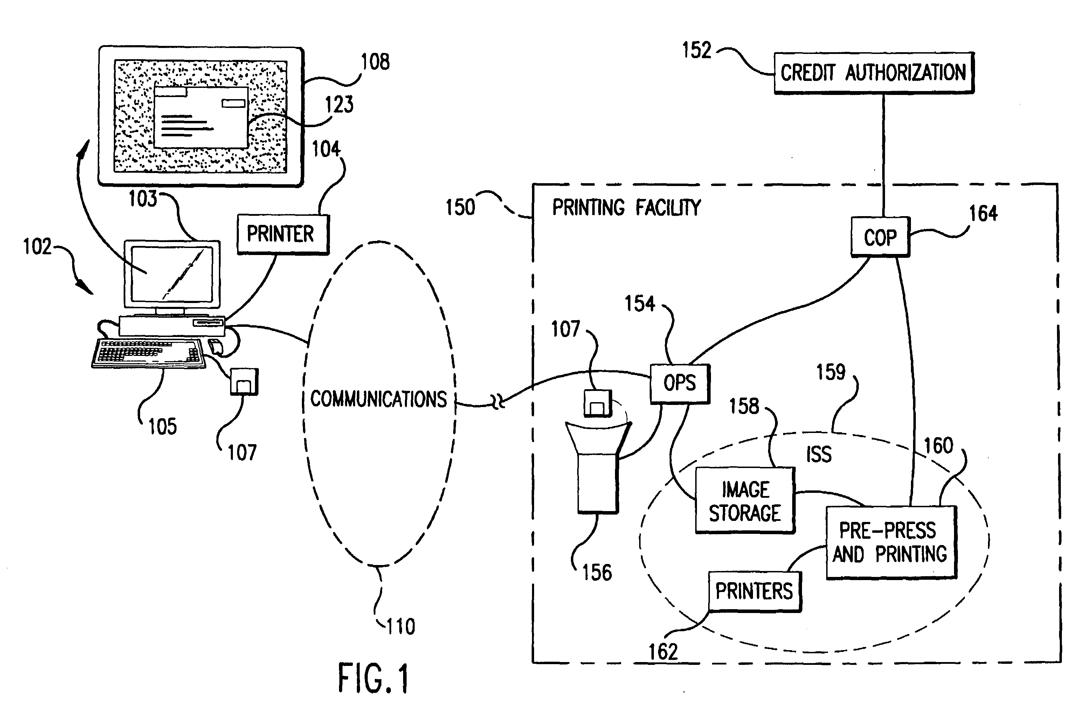

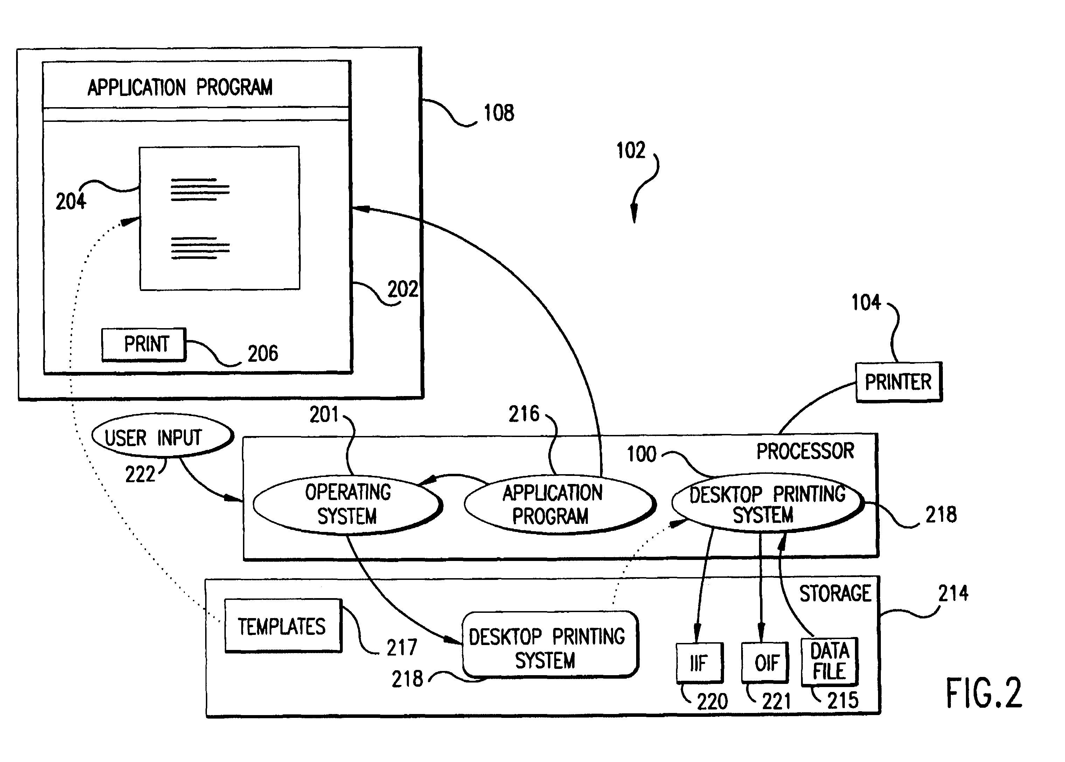

Fig. 1 of the drawings is a high-level block diagram of a preferred printing system utilized in the creation and printing of a printed product. A data processor in the form of a desk-top computer 102 includes a monitor 103, an office type printer such as a laser printer, and an input device such as a keyboard 105 and mouse 106 and is programmed with one or more application programs and a Desk-top Printing System (DPS) (seen at 218 in Fig. 2) to assist a user in the creation of a printable document. As seen at 108, which is an enlarged view of an image displayed by monitor 103, the user is presented with a graphical user interface containing one or more "windows" such as seen at 123. The user utilizes an application program to create or modify a document and invokes DPS 218 to cause the printing of the document. DPS 218 generates an image file which contains data and commands to be used in creating a printed product consistent with the printable document displayed by the desk-top computer. The image file is transmitted under control of the DPS to a Remote Printing Facility (RPF) 150 which causes the generation of the printed product. In addition to generating and transmitting an image file, DPS 218 generates print order information which is transmitted to RPF 150 and which is used by RPF 150 in the generation of the printed product. As will be discussed in greater detail below, the print order information contains information used in the printing of the print order such as the number of copies to be printed, as well as shipping and payment information and information used in the tracking of the print order. As used herein, the term "print order" is intended to mean the image information and print order information transmitted by the DPS to cause printing of a desired printed product. As used herein the term "printed product" is intended to refer to any finished good created by the RPF 150 in accordance with a print order received from the DPS 218. The term "printable medium" as used herein, is intended to refer to any medium which may be printed upon by the RPF 150 to create a printed product. Printable media include but are not limited to: paper of different types, labels, cloth materials such as shirts and caps, stickers and coffee mugs. The term "user" refers to an individual making use of the DPS to generate a print order. The term "printing" is intended to include other methods of placing an image onto a physical object such as silk-screening onto cloth, embossing, lithography, etc.

The RPF operates interactively with the DPS, via the Order Processing Server (OPS) module 154 to receive the print order and to verify that the information necessary to properly print the printable product is present. The OPS module 154 contains error checking and correction capability as well as checkstop capability to restart communications if interrupted. Once the print order is received from module 154, the image information is stored in module 158 and the order information is stored in COP module 164, which also obtains credit authorization, if necessary, from a facility 152 located remotely from the RPF. In addition the RPF schedules the shipment of packages including diskettes (explained below) to the RPF and the shipment of completed printing jobs from the RPF. Pre-press and printing module 160 receives the order information and the image information and causes the printing of the print order on one or more printers 162. Finally, the printed product is shipped in accordance with shipping information contained in the print order.

Communication between the DPS and RPF may utilize one of several known communication forms 110 including a direct communications link via a telephone line established between modems located at the DPS and RPF, use of a wide area network such as the Internet or use of a commercial "on-line" service such as CompuServe, or by physical delivery of one or more magnetic diskettes, seen at 107, which are automatically read by an automated disk reader 156. The disk reader 156 operates under the control of a disk-workstation which submits print orders to the OPS.

### II. Desktop Printing System (DPS)

Fig. 2 of the drawings is a block showing desk-top computer 102 loaded with DPS 218. Computer 102 is preferably a standard IBM-PC compatible computer system with the processing and storage capability necessary to run the Windows95™ operating system and application programs which operate under that environments. Computer 102 also preferably has a modem coupled to it. The operating system executed by the desktop computer 102 preferably performs system management functions such as controlling input and output to or from the desktop computer 102 as well as controlling the execution of application programs. The modem, which takes a conventional form, enables communication between the desktop computer 102 and a data processor at the RPF 150. The desktop computer 102 generates output data in a format to be displayed on a monitor 108 and printed on printer 104. Input to the desktop computer 102 is preferably generated by means of a keyboard and a mouse, both of which are shown generally at 222.

The desktop computer 102 contains in a storage device 214, one or more application programs 216 capable of creating data files 215 structured in a manner chosen by a user of the application program. Examples of such application programs are word processing programs such as Microsoft Word, and desktop publishing programs such as Microsoft Publisher, both available from the Microsoft Corporation, or WordPerfect available from the Novell Corp. As is known, such programs are capable of documents containing a variety of formatting options, including multiple types of fonts and multiple sections, with different page numbering options for each section. A detailed explanation of the use of such programs may be found in the users manuals available with the respective programs. References herein to the operation or use of the aforesaid application programs are understood to refer to features provided by those programs in commercial form and as described in the users manuals available with such programs. The storage device 214 preferably takes the form of a conventional magnetic hard disk.

DPS 218 is stored in the storage device 214 and advantageously enables documents created by one or more of the application programs 216 to be printed at RPF. The RPF 150 preferably contains a modem to transmit and receive information to/from the desktop computer 102, and other similar types of data processors located remotely from the RPF. Also stored in storage device 214 are templates 217, which are selectable by the user.

As shown in fig. 2, the desktop computer 102 has loaded in its memory, DPS 218 and application program 216 for concurrent execution along with operating system 201 which performs system management functions. The operating system 201 preferably takes the form of the Windows95 operating system available from the Microsoft Corp. The programs executed by the desktop computer 102 generate output to the monitor 108 by means of windows such as seen at 202. Windows may take a number of forms to display information and/or direct the input of user selections, via keyboard or mouse, by way of "dialog boxes", by way of "buttons" and data entry fields. For purposes of explanation, the windows illustrated in the attached figures are shown in simplified form.

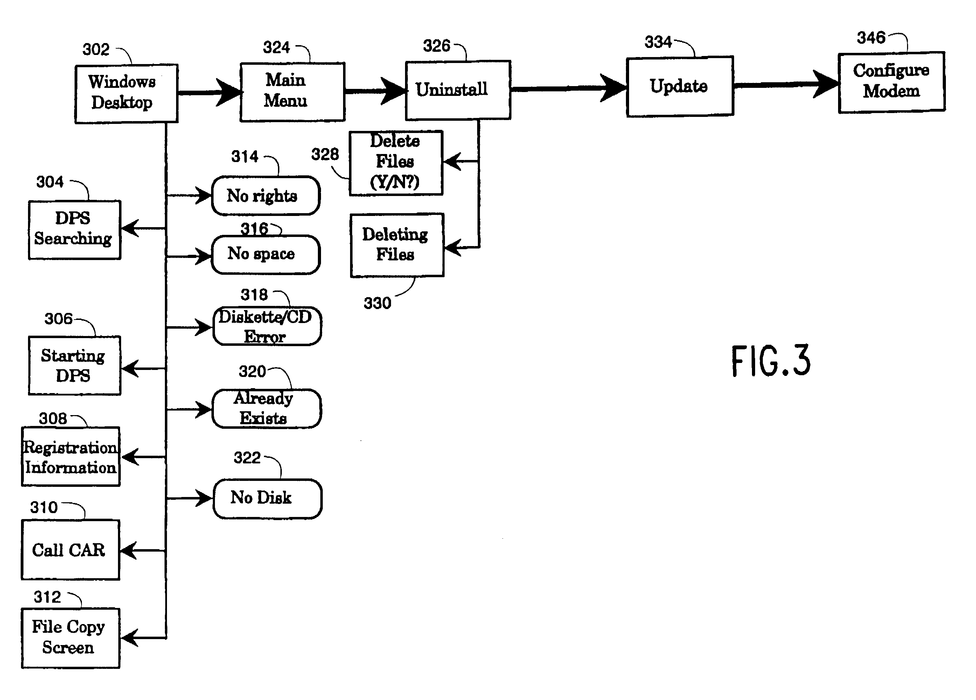

Figs. 3-9 of the drawings are flowcharts showing the operation of the DPS. Fig. 3 shows the functions performed by the DPS during installation of the DPS system onto the desk-top computer. The DPS is contained on a transportable storage medium such as a magnetic floppy diskette or an optical CD-ROM. While in the Windows desktop environment 302, the user invokes an installation sequence by clicking on an appropriate icon. Upon invocation, the DPS at step 304 determines the configuration of the desktop computer in order to properly configure the printing system. Specifically, the presence of a modem and the type of modem is checked, the port to which the modem is connected, the speed of the modem, the type of local printer connected to the computer and the port to which the printer is connected are all determined. Each of the aforesaid checks is preferably performed by an appropriate search of the registry in the Windows 95 operating system which is described in greater detail below. If, as seen at blocks 314-322, the user has sufficient rights to install the printing system at the selected location, sufficient space exists, the floppy diskette or CD-ROM may be read, the DPS has not already been installed (320) and if the floppy diskette/CD-ROM is installed then at step 306, the DPS is copied to the selected location and at step 308 the DPS requests entry of user specific data from the user. The user specific data is stored for future use and acts as a template for registration of the DPS. The user specific data includes the first and last name of the user, the user's company, position, mailing address, phone number, fax number and e-mail address. The DPS creates a registry variable for each item of user specific data and writes the data to the corresponding registry variable. As will be appreciated by those skilled in the art, the registry provided by the Windows95 operating system provides a unified database for storing system and application configuration data in a hierarchical form. Additional aspects of the registry in Windows95, as well as additional aspects of the Windows95 operating system are available in the *Win32 Software Development Kit for Windows95 and Windows NT(SDK)* available from the Microsoft Corporation, Redmond, Washington. By way of example, the DPS may make use of the following registry variables: first name, last name, company, position, two street address variables, city, state, province, zip code, postal code, country, phone number, phone extension, fax number, fax extension, e-mail address, key code, application software to be used, customer account number, RPF access phone number, RPF access backup phone number, modem port, modem speed, modem device, and modem configuration.

Upon entry of the information, the user is requested by the DPS via a pop-up screen 310 to call a Customer Assistance Representative (CAR) at the RPF to register the DPS software and to obtain a customer account number. The user receives the customer account number from the CAR and enters the number into the DPS which utilizes a verification algorithm to verify the customer account number with a software identification number provided with the DPS software. Upon entry of the number, the DPS software stores the customer account number to the registry and other information such as price tables, templates, printer drivers and icons are copied to the desk-top computer and decompressed. As seen in Fig. 3 at 314-322, the DPS will display an error message if the user does not have the proper rights to install, update or delete the DPS or to read or update the registry, film is insufficient space on the hard disk (316), there is an error in reading the diskette/CD which contains the DPS software (318), the DPS software already exists on the hard disk (320), or if no diskette has been inserted into the desktop computer (322) (in the event that the DPS software is contained on more than one diskette).

At block 324, the user is presented with a main menu screen which presents the user with three options: uninstall, update or configure the modem. If the uninstall option is selected, the DPS confirms with the user at block 328 that the DPS should be deleted and if the proper confirmation is made then at 330 the DPS and other files required solely by the DPS are deleted from the hard disk. If the update option is selected, then upon proper confirmation by the user, the necessary files are copied onto the hard disk and decompressed. Updating may advantageously be performed to update data used by the DPS, such as price tables, or to alter functions performed by the DPS. Upon each update, a registry variable, herein termed the "current version variable" is updated to indicate the version of the DPS. If the configure modem option is selected then the DPS retrieves modem variables such as the modem type and modem speed from the registry and the user phone number as entered in block 308, and displays the information. The user is provided with an option to have the DPS retrieve the proper telephone number for the RPF, and if this option is selected then the area code and three-digit prefix of the user's phone number are retrieved and the modem is utilized to make a toll free call to the RPF to obtain primary and secondary access phone numbers which are local to the user. The RPF utilizes the area code and three-digit prefix to obtain the primary and secondary phone numbers and transmits the retrieved numbers to the DPS which are then stored in the registry.

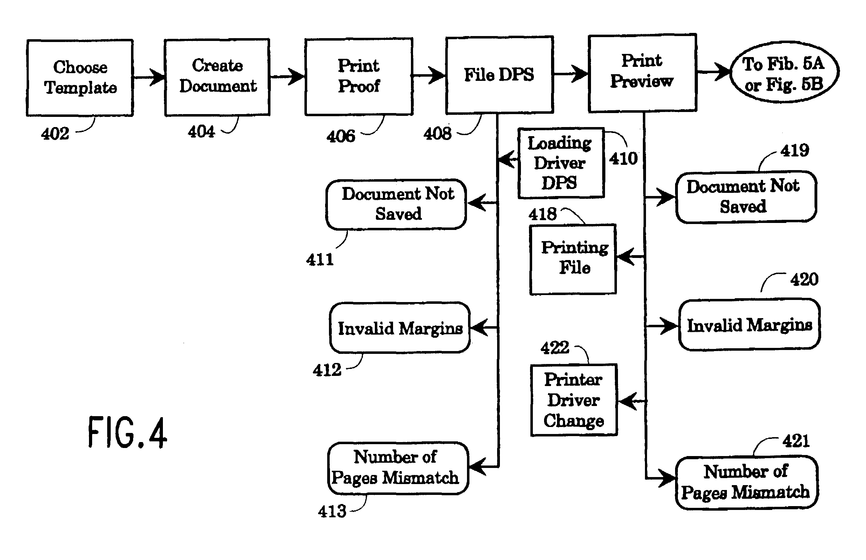

Once the DPS is properly installed as described above, it may be invoked from within an application program to cause printing at the RPF of a document created by use of the application program. As shown in Fig. 4 at 400, the DPS is invoked from within the application program, referred to herein as the "document production application", used to create a printable document. As seen in figs. 4, 4A and 4B, the user is presented with a succession of screens from which a variety of options to specify different aspects of the printable document may be selected. The selections entered in each of the screens is stored by the DPS upon selection of a button on the screen designated as the OK button or its equivalent. The options provided by each of the screens as well as the functions performed by the DPS within each of the screens is described separately below.

The DPS employs a variety of files, stored in text format, to provide the user with the options shown in Figs. 4-9. Each of these files is installed or updated during the operations performed in connection with Fig. 3. Each of these files is listed and described below in connection with the screens which employ those files. The DPS stores order information entered by the user to an Order Information File (OIF) which is described in further detail below.

To create a document for printing by DPS 218, a user makes use of the screens shown in Fig. 4 Fig. 4 shows the invocation of the DPS 218 from within the Microsoft Word95 application program, variants of the invocation of the DPS 218 will be apparent to those skilled in the art in view of the following description.

As seen in Fig. 4 at 402, the user first selects a template from within the application program. The template takes one of a plurality of document styles supported by the RPF. Preferably, the templates selectable by the user include business cards, post cards, greeting cards, booklets, and a plurality of types of bound documents. Once a document is created (404) by way of application program 216, the user may, at 406, print a proof of the document for review and possible further modification. At 408, the user selects the DPS as a printer from a menu within the application program. Upon selection of the DPS as the designated printer, the document is checked by the DPS to ensure that it has been saved. If the document has not been saved then a pop-up window is displayed (411) to inform the user to save the document, and the user is then allowed to proceed. If the document has been saved, a printer driver module within the DPS is loaded (410), the document is parsed by the DPS and dimensions, indicative of the printed boundaries of the document on a page are compared against an expected set of values corresponding to the selected template. For example, if a template utilizes a 4 inch by 6 inch card with margins of 1 inch all around. the printable area of that document will be 2 inches by 4 inches. elects a "print" option on the menu of the application program. If the margins on the document exceeds the margins allowed by the template, i.e., the printable area exceeds the specified printable area, an error message is displayed (412) to indicate that the margins are invalid. Once the printable area conforms to that specified by the selected template, the code for the application program used to create the document is written to the registry. Control is then passed to the "print preview" mode of the application program, seen at 416.

As will be apparent to those skilled in the art, in a "print preview" mode the active document is displayed in a "What You See Is What You Get" (WYSIWYG) manner where the document is displayed in a manner which closely represents the appearance of the document when printed. For instance, the exact page layout is displayed so that the user may view the document as it will appear when printed, before the actual printing of the document. The DPS 218 contains the necessary information to cause the "print preview" mode to display the document as it will appear when printed at the RPF.

Upon viewing the document, the user may wish to make further changes, or may wish to change the selected printer (422), to not use the RPF. When the user is satisfied with the appearance of the document, a "print" option, seen at 206, within the print preview mode is selected. Selection of the "print" option causes the DPS 218 to perform the checks shown at 419 and 420, which are performed in the same manner as explained for the checks seen at 411 and 412. In addition, the number of pages of the document are checked to ensure that they are within a range specified by the selected template. If the number of pages exceed the maximum number of pages, a pop-up window is generated to inform the user. Once the verifications shown at 419, 420 and 421 are performed the DPS generates a PostScript type file, referred to herein as a PS file, from the file, created by the application program, which contains the document to be printed.

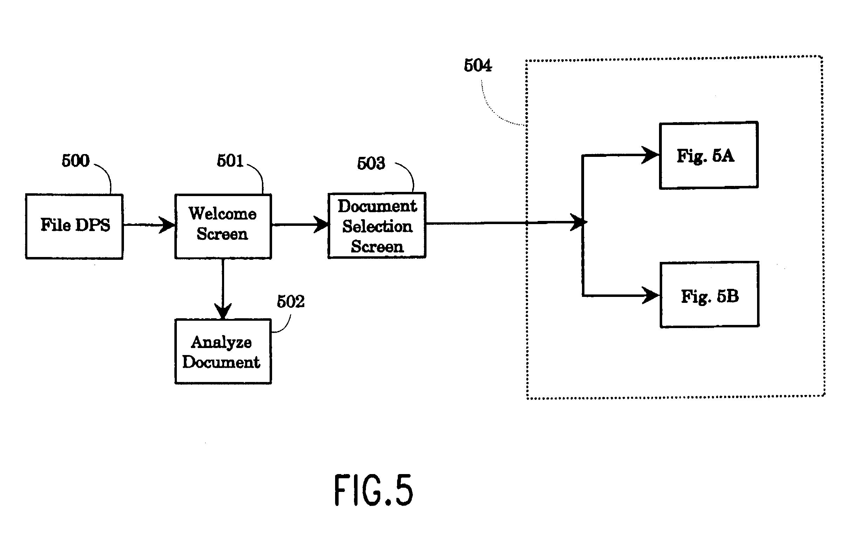

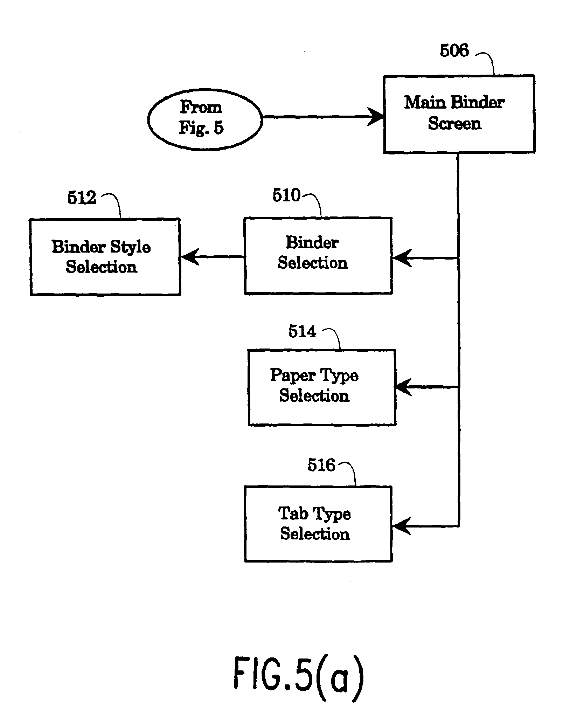

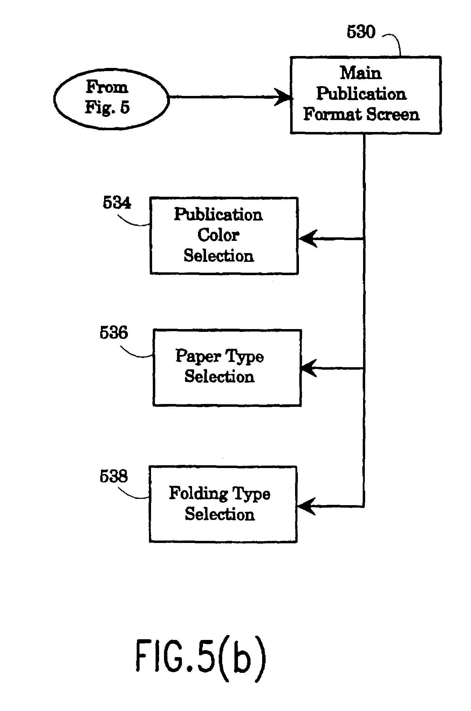

After the steps shown in Fig. 4, the user is presented with the screens shown in Fig. 5. The screens presented by the DPS which are seen in Figs. 5(a), 5(b), 6, 7(a), 7(b) and 8 are explained separately below.

### Welcome Screen (503)

This screen is initiated from screen 408 in Fig. 4. The screen provides a publication description field which allows the user to enter a fifty character description of the document to be printed. A search is made of the appropriate registry key to locate the PS file corresponding to the document to be printed. The computer 102 locates the file containing the printable document created by the user. Preferably the file containing the printable document takes the form of a PostScript type file, referred to herein as a PS file. A document description field within the screen is activated where the user can enter a 50 character description of the document. The document is then analyzed by the DPS, seen at 504, to verify the parameters of the file. The PS file is parsed to determine the following items: printer driver used, printable area for the document, number of pages in the document, and the number of colors used in the document. The printer driver used is checked to ensure that the DPS printer driver (Printovation Printer v3.3) is currently loaded. The registry variable, which identifies the template used by the customer, is read and compared to a template definition file, the structure of which is shown below: The template definition file is searched to find a match for the printable area length and width. The template definition file contains the margins appropriate for that publication type. The length and width collected from the PS file printable area are compared to the template file definition. If the values match control is returned to the Document Selection screen (505).

### Document Selection Screen (505)

This screen allows the user to select the type of document that they want printed. This screen is initiated by the Welcome Screen and displays all available document types which preferably include bound documents and unbound documents such as business Cards, postcards, greeting cards, any 8.5" x 11" folded documents, small booklets, and large booklets. As noted above, the templates for each of the available document types are provided by the DPS, and are selectable by the user to facilitate the creation of a document. Each of the preferred document types is described in greater detail below:

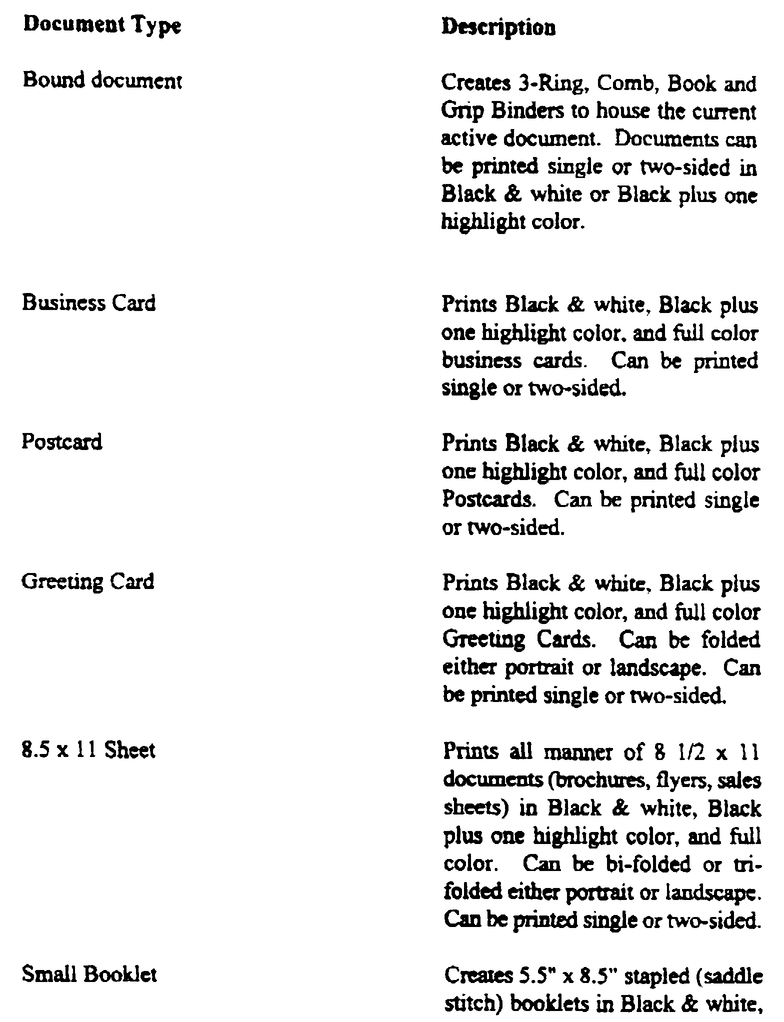

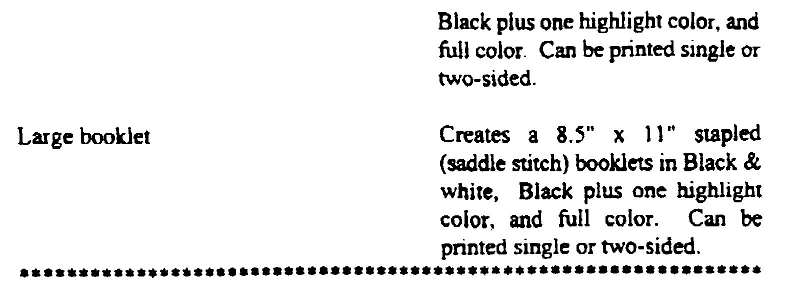

Upon selection of the desired document type, the DPS proceeds to provide further printing options as shown in Figs. 5(a) and 5(b) which show the steps taken to create, respectively, a bound or unbound document.

### Bound Documents

### Main Binder Screen (506)

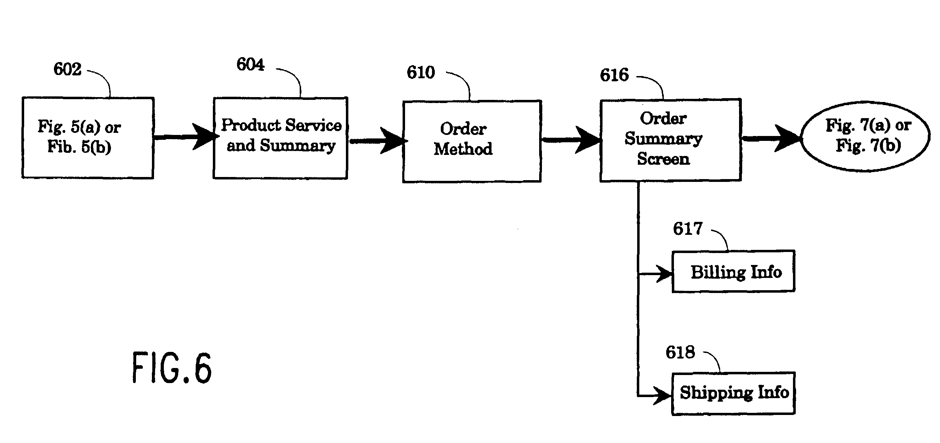

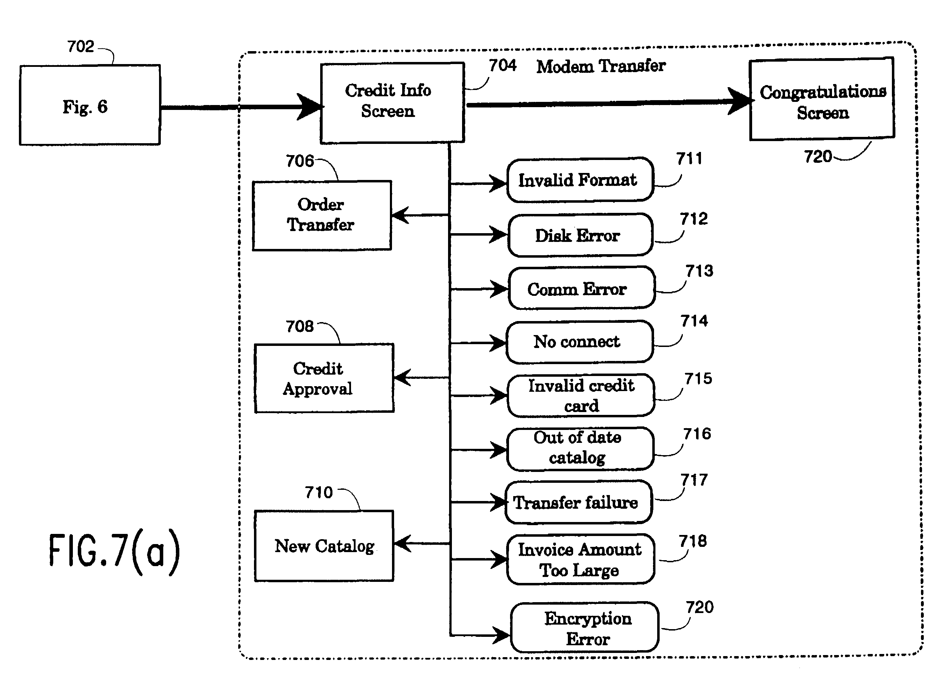

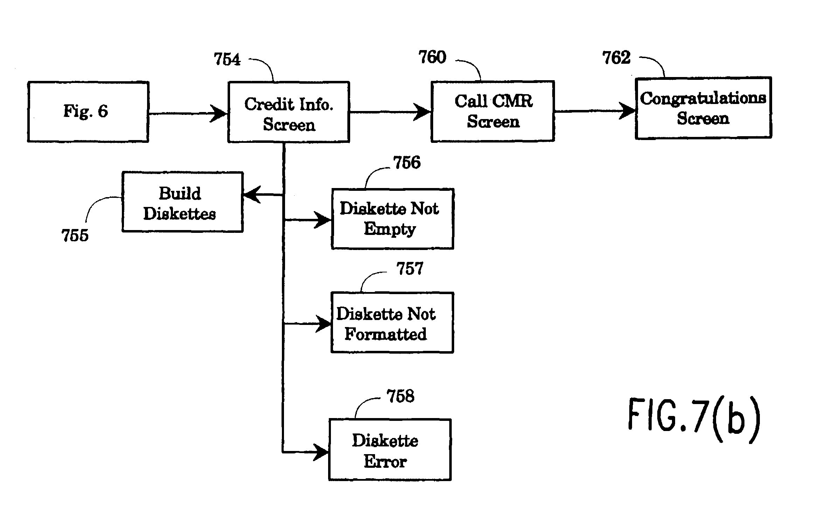

This screen allows the user to enter the number of copies of the bound document that they want, and to access screens 510, 512, 514, and 516. This screen also displays the unit cost and total cost for the selections entered in screens 510, 512, 514, and 516 which return control to screen 506 upon completion. Upon entry of such selections an image which is indicative of the selected binder style and color is displayed on the monitor. Also displayed is the unit cost and total cost for the selections. The number of pages of the document is automatically determined by the DPS by parsing the PS and is then displayed. Upon entry of the necessary selections of screens 510, 512, 514, and 516, control is passed to the Common Order Engine shown in figs. 6, 7(a) and 7(b).

### Binder Selection (510)

This screen allows the user to select the binder type they would like to use with their bound document. The DPS displays all of the binder types available which may be used with a document containing the number of pages of the document in question and provides means such as "buttons" for selecting a desired binder type. The DPS advantageously determines the available binder types based on the number of printed pages in the printable document and stores a binder type code upon appropriate selection by the user. One sided printing is selected by the DPS as the default. If the user selects two-sided printing then the number of pages for the bound document is recalculated by dividing a variable indicative of the number of single sided printed pages, by two and rounding up to the next whole number. The available binder types is then recalculated and the appropriate binders are activated. Upon selection of a binder type, a cover color selection means is provided to allow selection of a cover color for the bound document. Upon selection of the binder type, binder color, binder style and one or two sided printing, variables indicative of each of the selections are stored to determine a product number of the order and the display is updated to display the selected binder.

### Binder Style Selection (512)

This screen allows the user to select a style for the binder type they have selected. Styles preferably include Paperboard, Leatherette, Corporate, and Contemporary. This screen is initiated by selection of either Spiral, 3-Ring, or Perfect binder type on Binder Type Selection screen 510. Selectable buttons are displayed to provide a means for selecting a binders style. Upon selection of a binder style, the binder type code is changed to reflect the chosen binder style. The binder type code is then used along with the number of copies to determine a per binder cost value which is then stored in a calculate incremental cost field. An incremental cost and a total cost are then determined and each is displayed to provide the user with an indication of the cost of the print order. Thus, upon reviewing the cost the user may then alter the selected binder to obtain a more desirable total or incremental cost.

### Paper Type Selection (514)

This screen allows the user to select the paper type and paper color desired with the bound document. A listbox of all available choices, based upon the Binder Color selected on the Binder Type Selection screen 410 is displayed. Also displayed is a selection of the applicable inking choices, which are preferably, black and white and black plus one highlight color. A paper type code is stored upon selection by the user of a paper type, and a paper color code is stored upon selection of a paper color. The display is updated to reflect the selected paper type and color and a per page cost value is generated to determine updated incremental and total cost values, which are both displayed.

### Tab Type Selection (516)

This screen allows the user to select whether or not they want tabs in the bound document, and if tabs are desired, then the tab typed desired with the bound document. The screen is initiated by clicking at an appropriate location on screen 506. The screen 516 displays a list of all available tab choices and a listbox for entering the page numbers where the tabs will be placed, and text entry lines for entering user tab labels. When the user presses a tab choice button the listbox is activated with the tab type text displayed on each line, each line is blank if custom tabs are desired. The user can then enter both text for the tabs and the page where the tabs will appear, in this list box. As the page numbers are entered they are checked by the DPS to ensure that each number is larger than the prior number, that no duplicates are entered, and that no page number exceeds the number of printed pages in the document. When the user presses an OK button, the tab type is stored in a variable to determine a product number for the order and the Tab Text and Tab Page Numbers are stored, comma-delimited, in a sequential ASCII format in the OIF. The total number oftabs is used by the DPS to determine a per tab cost value which is used to update the incremental cost value. This value is then multiplied by the total number of copies to generate a new cost value, which is displayed together with the incremental cost.

**Unbound Documents.** Fig. 5(b) shows the succession of screens presented to the user to select the variety of options available to print an unbound document.

### Main Publication Format Screen (530)

This screen allows the user to enter number of copies of the unbound document that they want, and their specific document printing choices. This screen also displays the unit cost for their choices and the total cost for their order. The screen is initiated by selecting Business Card. Postcard. Greeting Card, 8.5 x 11 Sheet, Small Booklet, or Booklet annotations on the Document Selection Screen. The number of pages of the unbound document is determined by parsing the PS file. Once determined, the number of pages is then displayed on the screen. If the user selects either Small Booklet or Large Booklet then the number of pages in the document is checked to determine if it corresponds to a set of predetermined numbers for each type of booklet. For instance, for a Small Booklet type of document, if the number of pages is not 8, 16 or 24 pages then the user is informed that the document will include blank pages and an option is provided to change the type of document.

When control is returned to this screen the DPS calculates and displays the unit and total cost for the order. For booklets that contain a number of pages that is not 4, 8, 12, 16, 20 or 24 then the number of pages is rounded up to one of these values for searching the pricing table. If the user marks a send a proof checkbox on the screen, then a proof cost field is updated to reflect a quantity of 1 of the user's order by dividing the total cost field by the number of copies, and the Proof field in the OIF. Unless otherwise specifically noted, the incremental and total cost are calculated and displayed for selection of each option for unbound documents in a manner similar to that previously explained for bound documents.

### Color Selection (534)

This screen allows the user to select printing color parameters for producing the unbound document. This screen contains buttons for selecting the inking for the document, a list box of spot colors, and radio buttons to select single-sided or double-sided printing. If the selected document type is business card, or a greeting card where the number of pages equals one, then a button for single-sided printing enable and a button for double-sided printing is disabled. If the selected document type is Small Booklet, Large Booklet, or a greeting card where the number of pages is greater than one 1 then the double-sided button is selected and the single-sided button is inactive. If the Document Type is either postcard or 8.5 x 11 sheet then both buttons are active and the default is single-sided. The screen also contains three inking choices, black & white, black plus one highlight color, and full color. A drop-down list box of available spot colors is also displayed. Upon selection of each option the display is updated to reflect the selection.

### Paper Type Selection (536)

This screen allows the user to select the paper they would like to use with their unbound document. A listbox containing the available paper choices is displayed. The window also contains two radio buttons for selecting either Portrait or Landscape orientation for the finished document. If the document type is small booklet or large booklet then the portrait button is selected and the landscape button is inactive. For all other document types both buttons are active and the default is portrait orientation. When the user completes the selection, the paper type and orientation are stored to the OIF and the display is updated to reflect the orientation selected.

### Folding Type Selection (538)

This screen allows the user to select the type of folding they would like for their document. The screen displays selectable buttons for the available folding choices. By way of example, for the 8.5 x 11 Sheet the choices are Bifold, Tri-fold and No fold. When the user presses the OK button, the folding type stored in to the OIF.

Upon completion of the screens shown in Fig. 5 and 5(a) or 5(b), the DPS examines the PS file and performs several post-selection functions to ensure that the PS file meets certain standards required by the RPF. In addition, the DPS examines the PS file and identifies the Red, Green, Blue (RGB) colors specified in the file and sets any spot colors specified in the file to an RGB value for the selected spot color. The PS file is then encrypted and compressed, by conventional methods, to facilitate transmission to the RPF.

### Placing a Print Order

Upon selection of the options shown in Figs. 4, 4A and 4B, the user places a print order in response to the screens shown in Figs. 5, 6, 7 and 8 which implement an order engine. The order engine of the DPS provides means for entering and/or verifying billing and shipping information, provides a summary of the print order and then, upon confirmation by the user of the information contained in the summary, provides the user with a plurality of order transmission options. Upon selection of an order transmission option, the DPS proceeds to transmit or cause the transmission of, the necessary information to the RPF. Once an order has been placed, an order manager allows the user to obtain status information regarding the status of a print order pending at the RPF.

The DPS and RPF provide two transmission mechanisms for transmitting the necessary information from the DPS to the RPF to cause printing of the desired document. One mechanism is by electronically transmitting the necessary data from desk-top computer 102 to the RPF. The other mechanism is by storing the necessary data onto a transportable storage medium such as a magnetic floppy diskette and shipping it to the RPF, where the information on the diskette is read by the RPF. With either transmission mechanism, two files are transmitted. The first file is an Image Information File (IIF), seen at 220 in Fig. 2, which is the Postscript type file generated by the DPS from the data file 215. The second file is an Order Infomation File (OIF), seen at 221 in Fig. 2, which is contains other information, described in greater detail below, necessary for printing of the document. If transmission of the print order is done by shipping of floppy diskettes, a third file is generated for storage on the floppy diskettes. Referred to herein as a header file, this file contains an order number, which uniquely identifies the print order, a date stamp, and a diskette identification. For instance if the print order requires three diskettes, the first diskette will contain a diskette identification identifying that diskette as the first of three diskettes. The header file advantageously allows the RPF to utilize an automated disk reader which utilizes a bin sorter to retrieve a diskette and to position it properly for reading. A number of diskettes may be thrown into such a sorter and read in a random order. The header file allows the RPF to determine which print order corresponding to each diskette.

Fig. 6 of the drawings shows the steps taken to place a print order with the RPF. The steps shown in Fig. 6 are performed after selection of the options shown in Figs 5(a) or 5(b). The options provided by each of the screens as well as the functions performed by the DPS within each of the screens shown in Fig. 6 is described separately below.

### Product Service and Summary Screen (604)

This screen provides the customer with information about their product selection and allows them to select certain DPS services for processing their order. The screen displays a detailed listing of all the products selected by the customer. In addition, this screen allows the customer to order a proof from the RPF before printing of the print order. If a proof is selected, a separate charge for the proof is shown and the subtotal for the print order is updated.
Once the customer has reviewed the information on the screen the DPS proceeds to compress and encrypt the IIF, and informs the user of such action. Control then proceeds to screen 610.

### Order Method Screen (610)

This screen allows the user to select an order transmission mechanism for delivery of the print order to the RPF. Preferably the delivery mechanisms supported by the DPS and RPF include electronic transmission via modem, or by overnight delivery of a diskette containing the print order to the RPF. Initially, prior to displaying the screen a check is made of a modern type registry variable. If the variable exists then both the modem and overnight diskette delivery methods are activated. If the variable does not exist, then only the overnight diskette delivery method is activated. The size of the compressed file to be transferred and the modem speed registry variable are retrieved. The size of the file is divided into the speed of the modem to determine the approximate amount of time the transfer via modem will take. The size of the file is also divided into 1.4Mb to determine the number of diskettes the overnight diskette delivery method will require. The screen advantageously displays all available transfer options as selectable buttons, and the approximate time and diskettes required to perform the transfer. If the number of minutes required to transfer the IIF is greater than a predetermined maximum transfer time, which in a preferred embodiments is 300 minutes, the option allowing for transmission via modem is disabled. As seen at 625 and 626, error messages for disk error and insufficient rights are provided if necessary. If transmission by modem is selected, the screen informs the user of the approximate amount of time required to transfer the necessary information to the RPF.

Billing information screen 617 collects, displays & validates user information. It is initiated by the selection by the user in screen 616 of an option to change billing information. The screen advantageously displays prior order billing information gathered from the registry in order to reduce data entry by the user. If no prior billing information is available, then the information to be gathered includes the name, company, user account number which is generated by the RPF, the address, phone number and tax exemption certification. A first checkbox allows the user to indicate that their user address information has changed, the second that their billing information has changed, and a third checkbox that their shipping address is different from their billing address. The boxes are not checked by default. Three radio buttons are provided for selecting an order delivery service, such as overnight delivery, ground delivery or another intermediate priority delivery service. Upon completion of the screen all updated fields are written to associated registry variables.

Shipping information screen 618 collects, displays and validates shipping information. It is initiated by the selection by the user in screen 616 of an option to change shipping information The screen is initiated by the billing information screen if the same shipping address checkbox in that screen is not marked. The screen is displayed with default information gathered from prior order shipping information gathered from the registry. As with screen 504, error messages 511-514 are generated in a manner set forth in the description accompanying screen 504.

### Order Summary Screen (616)

This screen provides the user with information about the order and allows the user to accept terms and limitations imposed by the RPF. In addition, the screen displays a summary of the user's order information and the order cost, along with the shipping and billing information. The costs shown are the total cost from the price for a proof if a proof has been selected, the shipping cost, and the state order tax based upon the total of both the order and the shipping. An Approve button on the screen allows the user to confirm the order.

After screen 616, the user is presented with the screens in shown in Fig. 7(a) if modem delivery is desired or the screens shown in Fig. 7(b) if overnight diskette delivery is desired.

### Modem Delivery

### Credit Information Screen (704)

This screen collects the data required for credit authorization. The data incudes the credit card type, credit cardholder name, credit card account number and expiration date for credit card payments and user number for invoice orders. Payment by one of a plurality of commercially available credit cards is supported as well as payment by way of a pre-established user account with the RPF. If payment by way of the user account is selected then the DPS displays the user's current billing information, including the user account number and total amount of the order. The DPS provides a field for entry of the user's Personal Identification Number (PIN) number. When the PIN number is entered, and reentered' the payment section of the OIF is loaded with user number, PIN number, and the total amount of the order. If payment by a commercially available credit/charge card is desired then fields for entry of the credit card holder name, credit card number, and credit card expiration date fields are displayed along with the total amount of the order.

Upon entry of the required credit information, the DPS, as seen at 708, initiates, via the modem, a connection with the OPS portion of the RPF to obtain credit authorization and an order number which uniquely identifies the user's print order. A progress bar is provided to display status information regarding the transfer of the information from the DPS to the OPS. Upon receiving the request for an order number the OPS responds with one of four classes of messages. (1) informational, (2) change needed to process order, (3) order cannot be processed, or (4) an order number. If either of the first three of the foregoing messages is received then the user is allowed to change the appropriate information.

If an order number is returned by the OPS then the order number is stored in the OIF and the OIF is compressed and encrypted. The necessary information for printing of the print order by the RPF, which consists of the OIF and the IIF is then transmitted to the OPS and the user is informed of such action by screen 706. The screen contains a progress bar which is used to calculate the remaining time to transfer the order file. The progress bar contains 10 blocks which are added as each 1/10 of the total transaction occurs. The OIF is transmitted first and upon a successful reply from the OPS a submit image request is transmitted along with name of the OIF to request authority to transmit the OIF. When an appropriate acknowledgment is received the OIF is sent. Upon completion of transmission of the image files a terminate message is sent and control is passed to the Modem Order Congratulations Screen 720.

If the response from the OPS is an informational message, the user is provided with a screen 710 informing the user that the DPS software is expired and must be updated before an order with the RPF may be placed. Rejecting orders from expired version of the DPS advantageously allows the RPF to insure that each DPS has a up-to-date price and tax tables, and document format options, as well as being able to support the communication functions and formats used by the RPF.

As seen at 711-719 error messages informing the user of invalid format in the print order (711), disk error (712), communications error (713), no connection by the modem (714), invalid credit card (715), out of date software (catalog) (716), failure in the transfer of the IIF or the OIF (717), an invoice amount that exceeds a limit depending upon the customer's account or a predetermined maximum (718), or an encryption error in the encryption of the IIF or the OIF (719) are provided when needed.

### Modem Order Congratulations Screen (720)

This screen informs the user that their order has been placed and that their order status file has been updated. Also, the screen provides the user with information concerning their order and how to use the Order Manager to review the order details in the future. From this screen the user may also exit the DPS.

### Overnight Diskette Delivery

As noted above, the screens shown in Fig. 7(b) are presented to the user if delivery of the print order via diskette is desired by such an indication in screen 610. Each of the screens is described separately below.

### Credit Info. Screen (754)

This screen performs the same functions as described above for screen 704, and such description is incorporated herein. Upon entry of the necessary information, the DPS generates screen 755 which informs the user that the document is going to be copied to diskettes and leads the user through the copying process. A compressed image file may have a storage requirement of more than one disk. Accordingly, a pop-up window, referred to as a disk build pop-up instructs the user to insert the appropriate diskette into the disk drive at the appropriate time and gives build status to the user in the form of a progress bar. An updated text message for each diskette required is provided. Initially the disk build pop-up informs the user of the total number of labeled disks that will be required. This screen informs the user that the document will now be copies to XX diskettes and that these diskettes should be formatted and labeled Disk #1 through Disk #XX. The user can switch out of the DPS to format diskettes and then return. The screen also contains a progress bar which is used to calculate the remaining time to copy data onto the diskette in the drive. The progress bar contains 10 blocks which are added as each 1/10 of the total diskette size is copies. For each new diskette the progress bar is reset. When the user presses an appropriate button the diskette drive is checked for the presence of a writeable diskette, the progress bar is activated, and the first part of the image file is copied. The user can cancel at any time. A 1.2Mb portion of the compressed file is built on to a file on the diskette. When a diskette becomes full, the DPS provides an audible indication and the process is repeated for the remaining disks. When the file(s) have been copied, control is passed to the Call CAR Screen 760. As seen at 756. 757 and 758 error messages are provided to notify the user if the diskette being used is not empty (756), the diskette is not formatted (757) or if a disk error occurred (758).

### Call CAR Screen (760)

This screen informs the user to call a CAR who will perform a series of steps to ensure the user order. The steps include credit authorization, assigning the user an order number, order validation using a processing number, and scheduling the pickup of the order diskettes. The screen displays a field for Order Number, a Order Number Verbal Confirmation Code, a Verify button and a Next button. Both the Verify and the Next buttons are inactive. The user calls the CAR and enters the Order number and verification number given to them by the CAR. When numbers are entered into both fields the Verify button is activated. The user must then press the Verify button which creates a Base26 value for the Order number and compares it to the verification number entered by the user. If the values match then the user is allowed to proceed. If they don't match a message is displayed which indicates that both numbers need to be reentered. The CAR can then validate that the user has entered the correct Order Number. If the number has not been entered correctly then the user can re-enter it.

### Diskette Order Congratulations Screen (762)

This screen informs the user that their order has been placed and that their order status file has been updated. Also, the screen provides the user with information concerning their order and how to use the Order Manager to review the order details in the future. From this screen the user may also exit the DPS.

### Order Manager

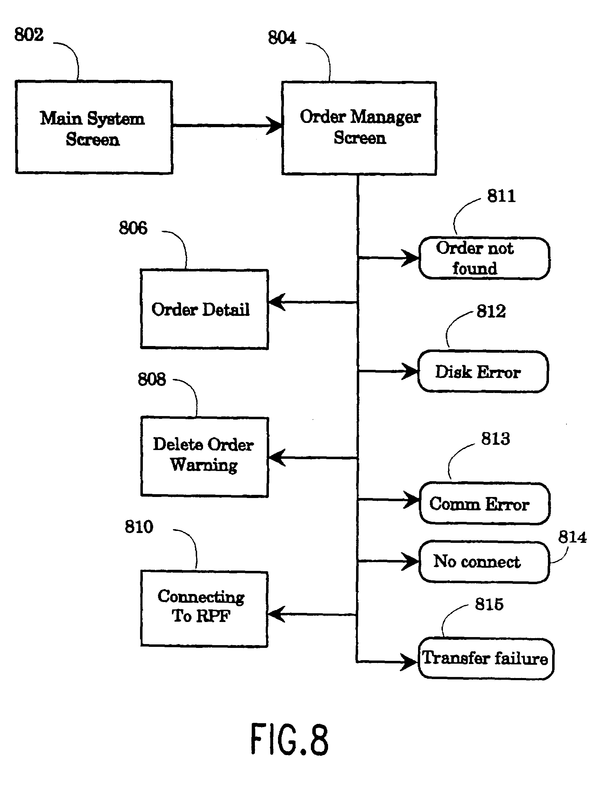

As previously described, the order manager allows a user to obtain status information from the RPF regarding the status of a previously placed print order. The order manager may be entered from the welcome screen initially displayed upon invocation of the DPS. Fig. 8 shows the screens provided by the order manager.

### Order Manager Main Screen (802)

This screen allows the user to review orders previously placed with the RPF, update the production status of these orders, and delete already received orders from the list. The screen displays a listbox of all previously placed orders, by order number, and order status, and their associated status dates (submitted date, received date, production date, and shipped date). Buttons allow the user to view the details of a highlighted order number, delete a selected order, remove all orders in the order file, or update the status of all the orders in the order file. When the user presses the Exit button the application passes control to the Windows Desktop.

### Order Detail Screen (804)

This pop-up screen displays the details of a previously placed order in an invoice format. The Order Number variable is used to locate the selected order in the Order File.

### Delete Order Warning Screen (806)

This screen informs the user that they are about to delete an order record from the Order Manager and gives them the opportunity to change their mind. The screen displays warning message allowing the user to abort deletion of the selected orders. If the user presses the NO button control is passed back to an Order Manager Main Screen without any deletion. If the user presses YES then the Order Number variable is checked, if the Order Number is ALL then all order records are purged. Otherwise, the order identified by the Order Number variable is deleted. In both cases, after deletion, control is passed back to an Order Manager Main Screen.

### Connecting to RPF Screen (808)

This screen informs the user that a connection is being established with the RPF. The screen contains a progress bar which is used to calculate the remaining time to finish the status update. The progress bar contains ten blocks which are added as each 1/10 of the total system size is copies to the hard drive. A connection is made to the RPF and an order status message is sent to the OPS. The OPS returns the order status message with the updated status dates entered. The message is then used to update the order file and on Order Manager Main Screen. While the message is being both sent and received a status bar is updated. When the update is completed control is returned to an Order Manager Main Screen.

### Order Information File (OIF)

The format of the OIF 220 is shown in the table below which provides the fields contained in the OIF along with the length of each of the fields in bytes. The DPS stores the necessary information as it is entered by the user in response to the appropriate screens shown in Figs. 4-7(b).

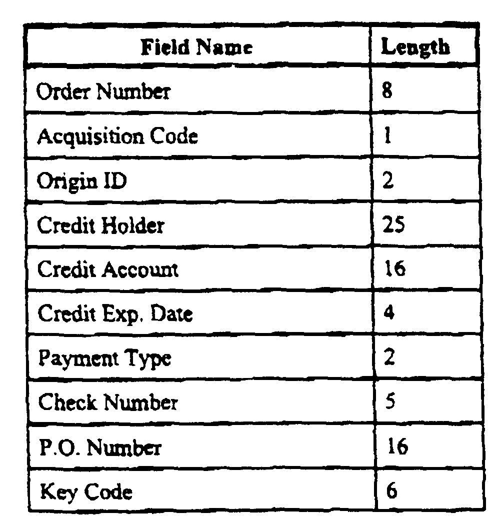

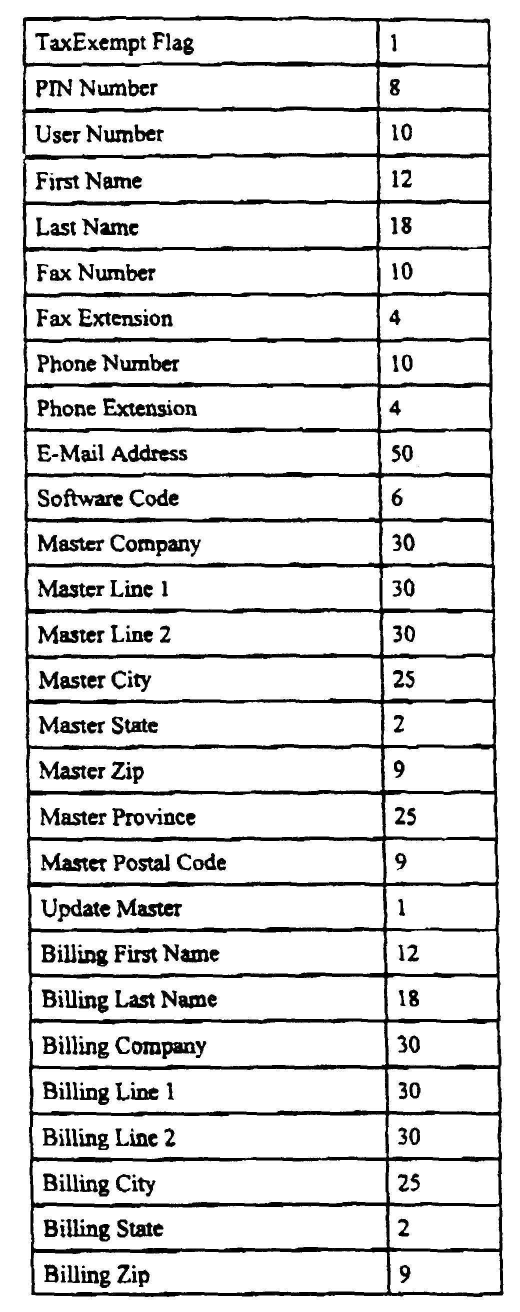

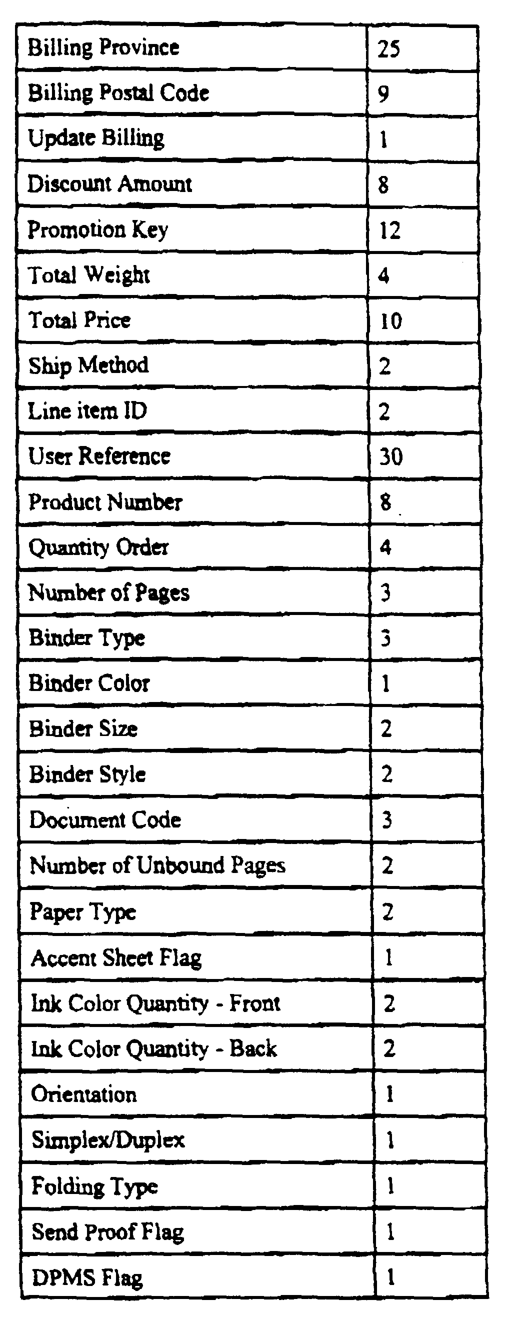

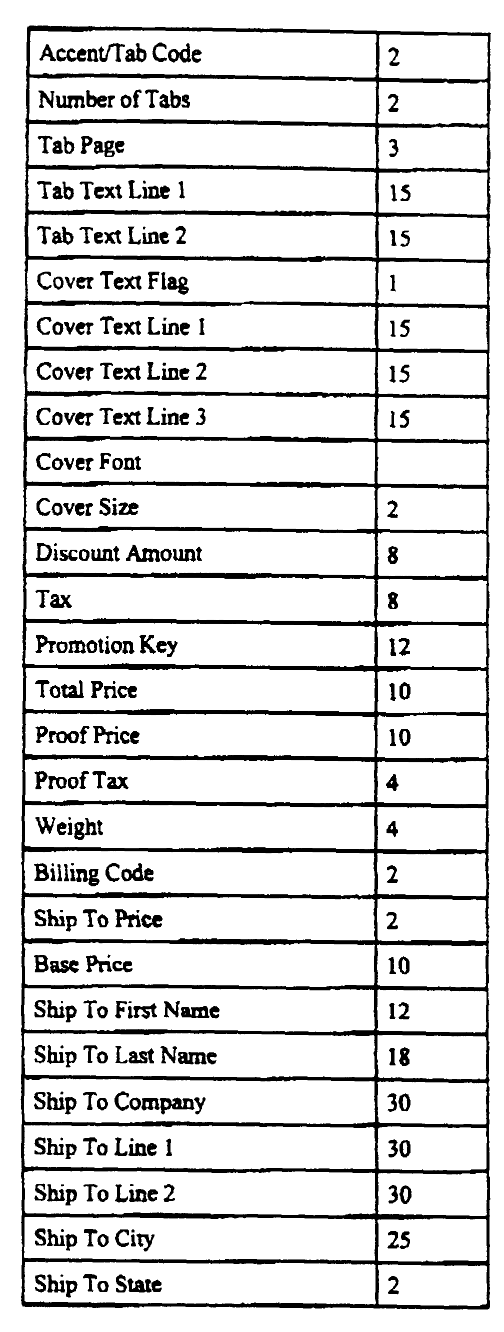

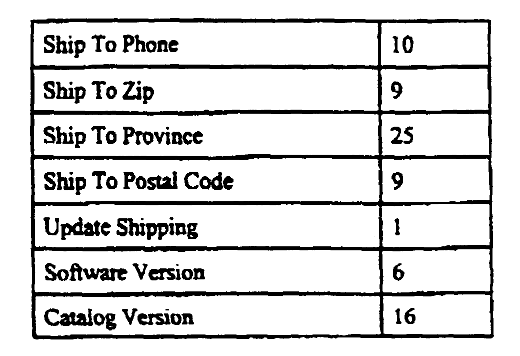

For implementation of the DPS on an IBM PC-compatible computer, the source code contained in the modules listed below, is executable upon conversion into an executable module, when combined with the necessary supporting code, using an appropriate C/C++ compiler available from Microsoft 2.2 or 4.0. The DPS is advantageously implemented with a plurality of objects which take the form of classes. As will be appreciated by those skilled in the art, the use of classes provides a number of advantages including expressing relationships between classes, sometimes referred to as inheritance of classes and the use related types of classes together, sometimes referred to as polymorphism. A description of the classes, which are employed by the DPS is provided below.

### Order Engine

The order engine, shown in Figs. 4-7(b), which provides means for entering and/or verifying billing and shipping information, provides a summary of the print order and then, upon confirmation by the user of the information contained in the summary, provides the user with a plurality of order transmission options is implemented by the following classes:

### CBillToInfo:

This class is responsible for storing Billing information and passing it to and from dialog boxes and the registry.

### CCustInfo:

This class is responsible for storing Customer information and passing it to and form dialog boxes and the registry.

### CShipToInfo:

This class is responsible for storing Shipping Information and passing it to and from dialog boxes and the registry.

### COCSS:

This class is responsible for storing information for creating the OIF file.

### CTabList:

This class is responsible for storing infonnation about tabs.

### CTabObj:

This class is responsible for storing information about tabs.

### CMisc:

This class is responsible for storing miscellaneous information for creating the OIF file.

### CPriceInfo:

This class is responsible for storing information about price tax and weight.

### CPRINTINFO:

This class is responsible for storing printing information such as binder type, ink type, number of copies.

### CCOVERINFO:

This class is responsible for storing data about cover sheets.

### CCOMPRESS:

This class is responsible for storing source and destination file names and compressing or decompressing the DIF and IIF.

### CEncrypt:

This class is responsible for storing source and destination file names and *encrypting* or decrypting the OIF and IIF.

### Installation

The screens shown in Fig. 3, which are used to install and update the DPS, are implemented by the following classes:

### CCallRPF

Prompts user to call the RPF to get registration ID for installed software and then generates a new ID.

### CFileCopy

Displays a progress bar when files are being copies the hard disk.

### CInstallPop

Informs user about the size of software to install and space available on hard disk. Provides browser for selection of directory to install software.

### CSearchPop

Informs user that program is currently looking for system configuration.

### CSplashDlg

Informs user that installation of the software is completed.

### CStartingPop

Informs user that the DPS is about to be installed.

### CUserReg

Displays registration form for installed software with such fields as Name, Address, Phone Number etc.

### CMainScreen

Displays the Welcome screen for application with 3 following options: Uninstall, Update and Configure modem.

### CmodemSetup

Displays information about modem installed and enables the user to change current customer phone number and dialing prefix.

### CInstUpdate

Provides information about installed software and prompts user to update software by pressing button Continue

### CDestInstall

Displays information about installed software and prompts user to reinstall it by pressing Continue

### Order Manager

The screens shown in Fig. 8 an implemented by the following classes:

### CMyListFormView

Displays information about orders in form of list:
Document Name/Status/Date Submitted/Date received/Date Processed/Date Shipped

### CDetails

Displays details about current order, activated by doubleclicking on the order in the order list. Information includes: Bill To; Ship To; Product Information: Quantity/Description/Price of Unit/Cost

### CtextMaster

Represents Edit control which enables to select Font and Alignment of the text, Font selection is based on standard Windows approach (via dialog). All member functions for Font/Alignment are provided.

### CcommonBaseObject

Abstracts the base class derived from Cobject.

### CnameAddress

Contains information about address for Billing or Shipping will be used as base class for CbillTo, CshipTo.

### CshipTo

Contains information about Shipping.

### CbillTo

Contains information about Billing. Adds only Order Number data field to NameAddress.

### CorderDetail

Contains information about product:quantity, description, price per unit.

### CorderDetailList

Container Class for COrderDetail. This is an array of COrderDetail objects with functions of adding, deleting, searching, etc.

### CorderSummary

Contains information about Order Summary: order name, date submitted, date received, date processed, date shipped.

### Corder

This class represents the concept of an Order (indeed, a subset of Order). It contains data about
- Order Summary: order name, date submitted, date received, date processed, date shipped
- Bill To information
- Ship To information
- Order Detail List - list of products

### CorderList

This is a container class for Corder objects. This is an array of Corders with adding, searching, deleting etc.

### CcoverText

Storage class for information required by the CtextMaster class: as Text, Font, Alignment. Gets this information from CtextMaster class and sets it to the Credit/CTextMaster.

### III. Remote Printing Facility (RPF)

Upon receipt of the print order the RPF decrypts and expands the received files and controls the routing, printing and shipping of the received order, as well as the necessary billing, including obtaining credit card authorization. The printing facility advantageously contains equipment to print onto each of the types of printable media supported by the DPS. Finally, the printed product is shipped to the user upon completion of printing to fulfill the print order. The RPF advantageously contains capability to accept orders from a plurality of DPSs in an automated manner which requires little human intervention.

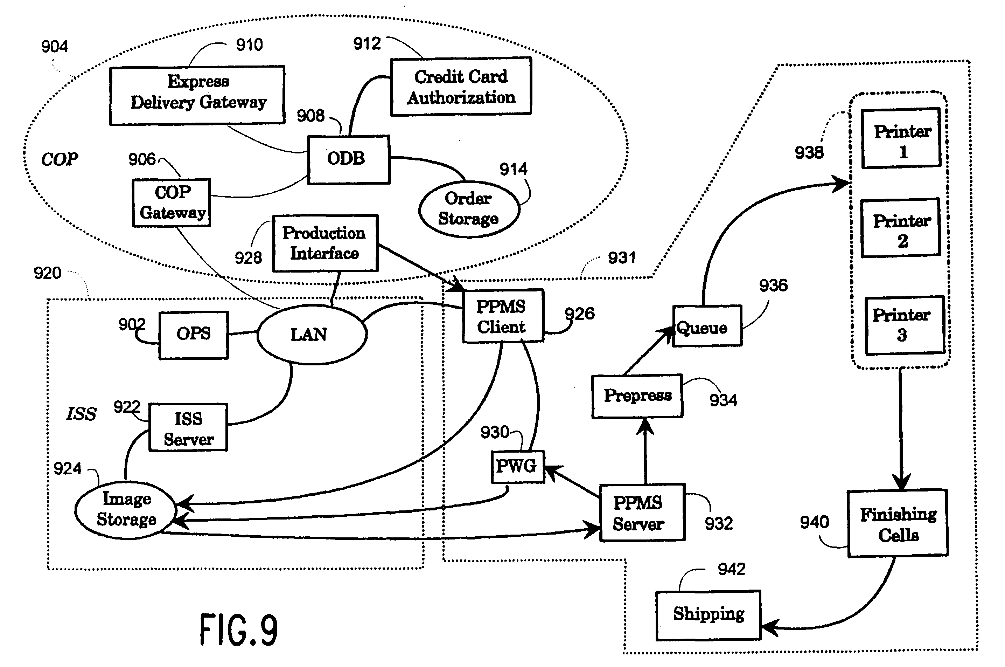

The RPF includes four major subsystems: a Order Processing Server (OPS), an Image Storage System (ISS), a Customer Order Processor (COP) and a Plant Production System (PPS). Each of these systems is shown in greater detail in Fig. 9 which is a schematic diagram of the components of the RPF. In general, the OPS handles communication with a plurality of DPSs, accepts print orders from the DPSs and transmits the necessary portions of the print order to the ISS and COP. The ISS stores and manipulates the image file and the COP stores and manipulates the order information, maintains status information pertaining to print orders, obtains necessary credit authorization and determines which PPS is to be utilized. The PPS, with data received from the COP and ISS causes the actual printing of the print order by an appropriate printer.

### Processing of Print Order

A print order transmitted by a DPS is received by the OPS and then validated by the OPS to ensure that the order contains the necessary information which is shown in the table showing the contents of the OIF. Once validated, the image information component of the order is transmitted to the ISS 920 and the print order information component of the order is transmitted to the COP 904. Once an order is validated, a worksheet and a plate information file are generated, and prepress operations are performed to generate a Printer Ready Postscript (PRP) file which is readable by a printer to print the print order. Upon completion of the prepress operations, the printer ready file is submitted to a print queue which determines the type of printer required and transmits the printer ready file to the appropriate printer. Upon completion of printing, the printed material is transferred to a finishing cell where finishing operations such as cutting of the paper to the appropriate size, folding, and packaging are performed. Finally, the finished material is transferred to shipping where the material is addressed and shipped to the appropriate location. A more detailed description of each of the above operations is provided below along with a description of the components of the RPF.

### OPS

The OPS is preferably implemented as a stored program operating on a computer with TCP/IP type communication capability. Functionally, the OPS performs three general functions: (1) client interface, i.e. communications with one or more DPSs, (2) OPS services and (3) RPF services.

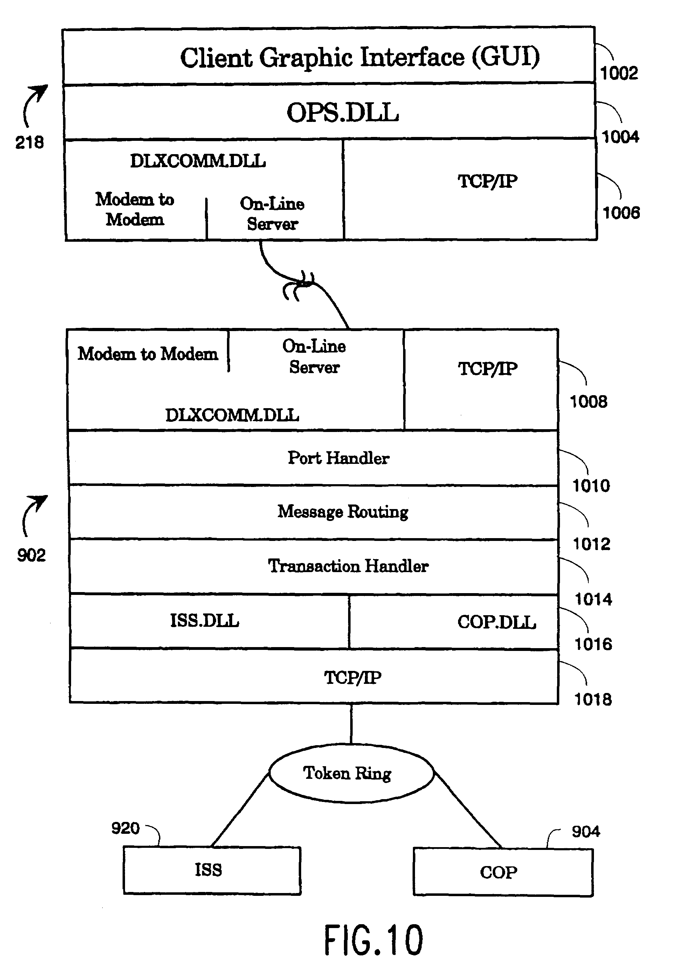

The client interface is responsible for interacting with the user to gather all the information necessary to place an order. A client may be a user application, such as the DPS, or it could be an internal system such as a disk workstation, seen at 156 in Fig. 1, for orders sent via overnight diskette delivery. The client when it has all the requisite information, communicate to the OPS. The client and OPS, through a set of transactions, transfers the order and image information necessary to complete an order. Fig. 10 shows the components of the Client/OPS architecture. The client architecture, i.e., the DPS, as viewed by OPS, consists of three layers: client graphic interface 1002, OPS.DLL 1004 and a communications layer 1006. The client interface consists of the screens used by the user to enter the required information for designing and entering an order via the DPS. Once the client interface 1002 has all the information necessary to send an order to the RPF, it calls upon the OPS.DLL 1004 layer to execute the transactions necessary to transfer the requisite files. The client also uses OPS.DLL to determine the state of the order at the RPF in a restart scenario. The OPS.DLL provides a set of objects representing the various OPS transactions and implements transaction object methods, which perform the necessary message and file transfer functions to complete the transaction.

The communications layer 1006 provides a communications object for accessing the OPS system and consists of two modules, DLXCOMM.DLL and TCP/IP to implement a plurality of communications protocols, which preferably include, TCP/IP, a number of modem-to-modem type connections and on-line server type communications such as performed by commercial on-line services. The communications functionality is advantageously abstracted from the actual transaction processing. This permits the transaction processing to be independent of the communications media. The client (DPS or the disk-workstation) is responsible for instantiating a communications object of the type required, and inserting the information necessary to establish the connection. Examples of such information are the communications port number and modem speed. The OPS.DLL module 1004 is preferably implemented to perform asynchronous communications through direct modem to modem connections, and via a commercial on-line service such as Compuserve. A TCP/IP object is also implemented for use by the disk workstation client.

Functionally, the OPS consists of six layers: in-bound communications 1008, port handling 1010, message routing 1012, transaction handling 1014, services DLLs 1016 and outgoing TCP/IP 1018. The in-bound layer 1008 is responsible for accepting an incoming connect from a client. For asynchronous connections, each connection/port is implemented with its own thread. For TCP/IP, there is one listening thread, which spawns a new thread each time a connection is accepted. The port handler layer 1010 contains the high level management functions for a thread. For example, it contains the logic for resetting a port to accept a new call after the prior session has been terminated Once a call has been accepted, logic flow passes to the transaction handler 1014. The message router 1012 issues a read to receive the first message of a transaction sequence and then parses this message, and passes control to the appropriate transaction handler in layer 1014. For each transaction object in OPS.DLL, there is a corresponding transaction handler 1014 in the OPS. The handler is responsible for communication with the required service DLLs, ISS.DLL and COP.DLL, and the client OPS.DLL to complete the transaction.

The service DLLs, ISS.DLL and COP.DLL, provide access to the transaction service of the associated servers, seen at 922 and 906 respectively in Fig. 9. OPS uses these interfaces to call the required service to complete a transaction. ISS.DLL and COP.DLL preferably use TCP/IP, seen at 1018, to communicate with their associated servers.

### OPS/DPS TRANSACTIONS

The transactions between the OPS and the DPS are listed and described separately below. The transaction name is provided in *italics* followed by a description of the transaction.

### OPS_Initiate_Section (New Order)

This transaction is used by the DPS to request a new order number. Upon receipt of the transaction, the OPS issues a BE_API_Init_Session transaction, passing the zero order number. A Backend API in the OPS then contacts the necessary Backend server to obtain a new order number. The Backend API returns an order state, which will be 'N', for a newly issued order number. The Backend API, through the appropriate server, validates the passed user number before issuing a new order number. If the Backend API is not able to reach the necessary server to obtain a new order number, or there are no order numbers available on any on-line servers, then the returned order state is set to 'U' and the order number is set to 0. The Backend API portion of the OPS implements communications between the OPS and the COP. Operations of the Backend API are described in further detail under the heading titled "OPS/COP TRANSACTIONS"

### OPS_Initiate_Sessian (Restart)

This transaction is used by the DPS to determine the order state of an order in progress. Based upon the returned order state, the DPS can determine which step in the order process should be executed. This transaction is usually used to restart an interrupted order submission process. The order/user number pair is the key for obtaining the order state code. The OPS issues the BE_API_Init_Session transaction passing the order number and user number. The Backend API contacts the necessary server to obtain the order state for the order/user number pair.

### OPS_Initiate_Disk_Session

This transaction is used by a disk workstation to determine the state of an order. Based upon the returned state, the disk workstation can determine which files are required to be sent to the OPS to complete the order submission process. The OPS issues a BE_API_Init_Disk_Session transaction. The Backend API contacts the appropriate server to obtain the order status. If the order/user number pair is not known by the Backend servers, then it is assumed that the order number was assigned by a CAR over the telephone. The Backend server then accepts the order number as a new number and make the necessary entries to realize the order number, and return an order number of 'N'.

### OPS_Terminate_Session

This transaction is sent by the DPS when it has finished processing. It signals the OPS that the DPS will be terminating the communications session. Upon receiving this transaction, the OPS sets a flag which indicates that loss of the communication connection is not an error.

### OPS_Submit_Order

This transaction is used by the DPS to send the OCSS document file to the OPS, and receive order acceptance before sending the image files. Prior to issuing this transaction, the DPS insures that the order state is equal to 'N'. The OPS first issues a BE_API_Get_Order_Location transaction to get the network location to store the image file. The Backend API contacts the file staging area server and looks up the order/user number pair. If the pair is found, the order state and network storage location is return. If the order is not found, then an exception condition is return. If an exception is returned to the BE_API_Get_Order_Location transaction, the OPS returns an OPS_SUBMIT_ORDER_PROCEED message to the client with a negative result code. The client then has to take the necessary action to correct the problem. If the order is found, then the order state is verified to be 'N' by the OPS. If the state is not 'N', then an exception is returned. If the state is correct, the OPS sets the target for the file receive to the return network location, and sends a positive OPS_SUBMIT_ORDER_PROCEED message t the client. The client then proceeds to send the OCSS file to the OPS. Upon successful reception of the OCSS file, the OPS issues a BE_API_Submit_Order transaction to the Backend API. The API then contacts the necessary server(s) to obtain a credit authorization for the order. If an authorization server is not available, then the order is still accepted, and marked for later verification. An order is only rejected if a positive reason for the rejection has been obtained. After receiving order acceptance, the Backend sets the order state to 'O'.

If the Backend API is not be able to contact the necessary server to obtain a verification of the order number and/or storage location or if no storage space available on any Backend server then an exception is returned.

### OPS_Submit_Disk_Order

This transaction is used by the disk workstation client to send the OCSS document file to the OPS, and receive credit approval before sending the image files. Prior to issuing this transaction, the client program insures that the order state is equal to 'N'. The OPS first issues a BE_API_Get_Order_Location transaction to get the network location to store the image file. The Backend API contacts the file staging area server and looks up the order/user number pair. If the pair is found, and sufficient disk space is available, the order state and network storage location is return. If the disk space is not available, then an exception condition is returned. If an exception is returned to BE_API_Get_Order_Location transaction, the OPS returns an OPS_SUBMIT_DISK_ORDER_PROCEED message to the client with a negative result code. If the order is found, then the order state is verified to be 'N'. If the state is not 'N', then an exception is returned. If the state is correct, the OPS sets the target for the file receive to the return network location, and sends a positive OPS_SUBMIT_DISK_ORDER_PROCEED message to the client. The client then proceeds to send the OCSS file to the OPS. Upon successful reception of the OCSS file, the OPS issues a BE_API_Submit_Disk_Order transaction to the Backend API. A disk workstation order is always accepted. Credit checking is a deferred process. The Backend sets the order state to 'O'. It is possible that the Backend API will not be able to contact the necessary server to obtain the order number and/or a storage location. If this happens, the disk workstation should issue an exception to its console/printer and periodically retry the transaction until it succeeds.

### OPS_Submit_Image

This transaction is sent by the DPS client to transfer the image files to the OPS, and complete the order submission process. Prior to issuing this transaction, the client program should insure that the order state is equal to 'O'. Upon receipt of the transaction, the OPS send a BE_API_Get_Image_Location transaction to Backbend API. The Backend API contacts the necessary server to obtain the order state and the network location. The server validates the order/user number pair, and reserves the necessary disk space to accommodate the image files. If the order is not found, or space is not available, an exception is return. Otherwise, the network storage location and order state is returned. The OPS then validates that the order state is 'O'. If network storage location is available, and the state is 'O', a positive OPS_SUBMIT_IMAGE_PROCEED message is returned to the client. If an exception conditions has been found a negative positive OPS_SUBMIT_IMAGE_PROCEED message is returned to the client. The OPS sets the target directory to the network storage location for the file receives. Upon receipt of a positive OPS_SUBMIT_IMAGE_PROCEED message, the client then proceeds to send the first image file. The OPS will continue to send a OPS_SUBMIT_IMAGE_PROCEED message to the client until all of the image files are transferred. When all the files are received, the OPS issues a BE_API_Submit_Image transaction. The Backend API then contacts the necessary servers to begin the final order processing, and sets the order state to 'C'.

### OPS_Submit_Disk_Image

This transaction is sent by the disk workstation to transfer the image files to the OPS, and complete the order submission process. Prior to issuing this transaction, the workstation should insure that the order state is equal to 'O'. Upon receipt of the transaction, the OPS send a BE_API_Get_Image_Location transaction to Backend API. The Backend API contacts the necessary server to obtain the order state and the network location. The server validates the order/user number pair, and reserves the necessary disk space to accommodate the image files. If the order is not found, or space is not available, an exception is return. Otherwise, the network storage location and order state is returned. The OPS then validates that the order state is 'O'. If a network storage location is available, and the state is 'O', a positive OPS_SUBMIT_DISK_IMAGE_PROCEED message is returned to the client. If an exception conditions has been found a negative positive OPS_SUBMIT_DISK_IMAGE_PROCEED message is returned to the client, and the OPS sets its target directory to the network storage location for the files receives. Upon receipt of positive OPS_SUBMIT_DISK_IMAGE_PROCEED message, the workstation then proceeds to send the first image file. The OPS will then acknowledge each file with a OPS_SUBMIT_DISK_IMAGE_PROCEED message until all the files are received. When all the files are received, a BE_API_Submit_Disk_Image transaction is issued. The Backend API then contact the necessary servers to begin the final order processing, and set the order state to 'C'. The OPS then sends the results of the BE_API_Submit_Disk_Image transaction with a OPS_SUBMIT_DISK_ORDER_RESPONSE message.

### OPS_Check_Version

This transaction is used by a DPS client to determine the currency of its software/price/product bundle. The OPS, upon receipt of the transaction, call the BE_API_Check_version transaction, passing the user number and the version ID from the client. The Backend API contacts the necessary server to compare the client's version ID with the latest version. If the client's version is current, the API sets the latest version ID the same as the clients, sets the product code to a null string, and the software size to zero. If the client version is out of date, then the software ID is set to the current ID, the product code is returned, and the total size of the update is returned. It is possible that the necessary server(s) are not available, the passed client version ID is invalid, or the user number is invalid.

### OPS_Order_Status

This transaction is used by the DPS client to determine the status of one or more outstanding client orders. Order status request file with status on all requested order numbers. The submitted, received, produced and shipped date/times are returned for each order number. It is possible that one or more of the numbers are unknown at the Backend, and a "found" field is included in the status object. Upon reception of the transaction, OPS checks to see if there is sufficient local storage to receive the serialize order status file. If there is not, then a negative OPS_ORDER_STATUS_PROCEED message is sent to the client. If there is space, then a positive OPS_ORDER_STATUS_PROCEED message is sent. Upon receiving a positive proceed message, the client sends the file. When the OPS receives the file, it opens it and deserializes the objects. A BE_API_OrderStatus API call is then issued by the OPS. The Backend API issues a request to the Backend server(s) to get the status of each requested order. It is possible that the required Backend server is not accessible, the user number is invalid or one or more of the order numbers are unknown. Upon return from the Backend API, the OPS updates the order status objects, and serializes them to a file. A OPS_ORDER_STATUS_RESPONSE message is then sent to the client. If the response was positive, the OPS then sends the updated serialize order status file to the client.

### OPS/COP TRANSACTIONS

The following description explains, separately, each of the transactions implemented between the OPS and the COP. The following functions make use of a variety of parameters, which are explained below:
- Order#: This is the number for the Print order for which information is desired.
- Customer #: This is the customer associated with the Print order for whcih information is desired.
IP Address
- List: This is a list of IP Addresses maintained by the OPS. Each address is a candidate COP Gateway. If the first Gateway in the list fails, the OPS marks it as bad, and returns the operation with the next candidate. This process continues until there is a successful communication or all of the candidates are exhausted. If all candidates are exhausted, a Facilities Not Available error is returned.
- Order State: This indicates a Go For File Transmission state for a Print order. This parameter is always an output only. The values for this parameter are:
'U' Undefined - The COP Gateway has no record of the order or was unable to provide a new order number.
'N' New - The COP Gateway has assigned the order number, but no files have been received for the order.
'O' Order - The order file has been received for this order.
'C' Complete - All the files have been received for this order.
Result Code - A code indicating which error occurred.
Result Message - A message pertaining to the error intended for the customer.

### BE_API_Initiate_Session

This function is called by the OPS to either get a new order number for a new order, or to retrieve the Order File Transmission state for an existing order. To get an order number for a new order, OPS calls this function with an order number of 0 and a valid customer number. To access the order transmission state for an existing order, OPS calls this function with the number of the existing order and the customer for this order. In either case, the order state is returned, along with a result code.

### BE_API_Initiate_Disk_Session

This transaction is used by the disk workstation for entry of order received via diskette. The order could have been initiated via modem, using initiate session transaction, in which case COP issued an order number. Or the order could have been submitted entirely by diskette, in which case a CAR issued an order number through an Order Processor Interface (OPI) which performs the commands issued by the CAR. The order disks contain the image files as well as the order file. The puopose of this transaction is to synchronize with order status. This function attempts to access the state information on the order from the COP Gateway. If the order is not found, it is assumed that the order was manually entered by a CAR and an attempt is made to synchronize the COP Gateway with the existing order.

### BE_API_Get_Order_Location

Provides the location at which to store image and order files for this order. This function attempts to access the state information on the order from the Gateway. If the space required for the files is greater than the space remaining on the disk, a 'Disk space not available' error is generated.

### BE_API_Submit_Order

This transaction is used by the client (DPS or disk workstation) to submit an order file to the staging area. It assumes that an order number has been assigned by a prior initiate session. The COP accesses the order file directly from the staging area. An attempt is made to submit the order file to the Order Database (ODB). If successful, a credit check is attempted. If the ODB is down the order is deferred.

### BE_API_Submit_Disk_Order

This transaction is used by the disk workstation for sending an order file from a disk order. This is done when the order was submitted without a modem, and the order in ODB originated via a CAR. It assumes that an Initiate Disk Session has already been completed. The order file is sent from the first diskette to get the staging area in sync with ODB. The COP accesses order file directly from staging area. An attempt is made to decrypt and instantiate order and to submit the order to the ODB. If submission to the ODB is successful a credit check is attempted.

### BE_API_Get_Image_Location

Request the location to transmit the Image file(s) The path where the image files are to be stored is determined in accordance with the order number and customer number. If a file size is specified, an error is returned if space is not available. The full path of the directory in which to stored the files is the answer provided in the Location parameter.

### BE_API_Submit_Image

Informs the COP Gateway that the image file has been received. The order transmission state is set to 'C'. After the state has been set to 'C', the order is available to be released by the release process.

### BE_API_Submit_Disk_Image

Inform the COP Gateway that the image file from the disk workstation has been received. The order transmission state is set to 'C'. After the state has been set to 'C', the order is available to be released by the release process.

### BE_API_Check_Version

Provides the current version number of the DPS (a string of constant size) and the number of bytes required to download the most version given the users version.

### BE_API_Order_Status

Update the order list with the current status of each entry in the list. A query is made to the COP Gateway for the status of each order number in the Order list. The status field is updated with the results returned.

### BE_API_Initialize_API

Passes the name of an initialization file that the OPS requires to set up internal parameters. Performs internal initialization. This includes the setting of debug data required by the OPS when in debug mode.

### Customer Order Processor (COP)

The COP, shown within dotted line 904 in Fig 9, includes a number of components which operate under control of the COP gateway module 906. The COP gateway module 906 is preferably implemented as a general purpose computer executing a stored program which controls the communications and processing functions of the computer. Preferably the computer takes the form of an IBM PC compatible computer operating under control of an IBM OS/2 operating system. The COP Gateway preferably communicates with the OPS 902 and with the ISS Server 922 in accordance with the TCP/IP protocol and with the ODB module in accordance with the LU6.2 protocol as specified by the IBM Corporation. The COP Gateway provides an order number, dispatch information, and credit information to the ODB module 908. Production interface module 928 communicates with one or more PPSs to determine where to route the print order for printing if multiple PPSs are being used. For example, all color printers may be located at one plant, while all black and white printers are located at another plant. The Production interface module 928 would determine such attributes from data stored in the ODB module and would route all color print orders to the first plant and all black and white print orders to the second plant. Once the Production Interface determines which PPS to route the print order to, it transmits an order number to a Prepress and Manufacturing Scheduling (PPMS) Client module 926 located at a PPS.

The COP preferably implements the functions which are listed and explained separately below:

### Assign Order Number

This COP Gateway function creates the resources that allow the Gateway to accept an order to be inserted into ODB and manage the transfer of files into the media database (MDB).

### Record Order Number

This COP Gateway function allows the gateway to manage the transfer of files into the media database for an order that was entered into ODB by some entity other than the Gateway.

### Get Order Directory

For a give Order # and Customer #, returns the location of the files for the order that has been assigned by the COP Gateway during Submit Order or Submit Disk Order.

### Submit Order

This function is used to signal the COP Gateway that the order file has been received. The COP Gateway uses the Customer # and Order # to locate the directory where the order file is stored and attempts to save the order.

### Submit Deferred Order

This COP Gateway function is used to manually queue an order for deferred processing. One example of the use for this function is a Disk Order, in other words, a print order transmitted by magnetic diskette. Such orders are deferred both to preserve bandwith for online orders and to redirect error notification to a CAR, since there is no online user to take corrective action.

### Submit image

This function is used to signal the COP Gateway that the image file has been received for an order. The files are marked as having been received by the COP Gateway. This will allow the Media Database Move Processor to move the files into the MDB.

### Get Order Status

Makes a call to the ODB to obtain the status of an order, by passing an order number to the ODB.

### Deferred Order Processor

Orders become deferred either when ODB is down when the order is received or when they are disk orders. This function saves these orders on the host.

### Order Completion Processor

After orders have been saved on the host and all the files have been received and those files have been moved to the Media Database, then an 'Image Files Received Timestamp', indicating the time which a print order was received is completed. This function completes the time stamp in accordance with the above criteria.

### Media Database Move Processor

Moves files from the Order Staging Area to Media Database. Files are eligible to be moved when at least all the files have been received into the Order Staging Area.

### Order Exception Processor

This function 'cleans up' orders that have been placed in an exception state. An exception state is a failure state from which an order can not be processed. If the exceptions that caused the state have been addressed, the order can be placed into a valid processing state.

### Order Scavanger

This function 'cleans up' old orders that are in the 'New', 'Saved', 'Rejected', 'Completed' or 'Canceled' states.

### COP_Submit Order

This function responds to an order number and is normally called by the OPS when talking to a DPS client. The COP sends a request to the ISS to return a location of a print order. The ISS returns a location and the COP obtains the OCSS file and parses the filed to obtain any needed information. If the ODB is operational, the COP attempts to obtain credit information. If the ODB is down then the COP sends the ISS a Deferred Order Processor call. The COP then sends the ISS a message to update a transaction state in the ISS and causes the print order to be added or updated in the ODB. An acknowledgment is then sent to the OPS to indicate success or failure.

### COP_FullfillOrder

This function receives an order number and requests the ODB to change the status of an order from pending to released. Once this occurs the order can be processed by the RPF for completion.

### ODB

the ODB module 908 takes the form ofa high throughput, highly reliable relational database which operates to store the order information contained in print orders received by the OPS 902. Preferably the ODB module takes the form of an IBM 3090 series mainframe controlled by the MVS operating system. The relational database preferably is implemented as a DB2 type database available from the IBM Corporation. The ODB module stores the print order information in order storage module 914. Status information regarding print orders is also maintained in the ODB module. The ODB module controls the obtaining of credit authorizations from credit card authorization module 912 and controls the obtaining of shipping order requests, and shipping package status from commercial delivery services via express delivery gateway 910. The credit card authorization module 912 operates under control of the ODB module to electronically transmit credit authorization information such as a credit card number, expiration date and the amount of the transaction to a remotely located credit authorization facility. The module 912 receives the information from the credit authorization facility in the form of an authorization number if an authorization is made or a denial of credit code and transmits the received information to the ODB module which then transmits the information to the OPS for transmittal to the appropriate DPS.

The Express Delivery Gateway module 910 operates under control of the ODB module 908 to schedule delivery of a print order via an overnight delivery service from the user to the RPF. Specifically in this regard it transmits a dispatch request, obtains and airbill number and obtains dispatch status of an order. In addition, the module 910 operates to electronically schedule pickup and delivery of a completed print order from the RPF to the address specified by the user.

### Image Storage System (ISS)

Functionally, the ISS includes two modules: ISS server 922 and Image storage module 924. Operations of the ISS are controlled by the ISS server module 922 which is preferably controlled by an IBM PC style computer running the OS/2 operating system, available from the IBM Corporation. The ISS server 922 receives the image information from print orders and stores the image information in image storage module 924 (also referred to as a media database) which operates under control of module 922.

### PLANT PRODUCTION SYSTEM (PPS)

The RPF advantageously allows orders received by the OPS to be printed at a facility located remotely from the OPS. Plant Production System (PPS) 931 may be situated locally to the OPS or at a location geographically remote from the OPS. The RPF may also contain a plurality of PPSs, which may be dispersed at diverse geographic locations, for a number of reasons, including facilitating the shipping of print orders.

The PPMS client 926 utilizes an order number received from Production Interface 928, to obtain the image information and order information from the ISS and COP respectively and transmits the information to a Plate and Worksheet Generation (PWG) module 930 which generates plate information files as well as worksheets. A "plate information file" is intended to refer to the information transmitted to a printer to cause printing of images onto a printable medium. A plate information file commonly contains multiple images which are arranged in a manner to optimize efficiency of a particular printer, to achieve functions more commonly known as "batching" or "grouping". For instance, if a print order specifies the printing of business cards, a plate information file arranges multiple images of the business card to be printed onto an optimum size of paper for the printer. Upon printing, the business cards are then cut to the proper size in finishing cells 940 (to be described). The term "worksheet", as used herein, is intended to refer to an informational document which is printed under control of the PWG and which contains a printed image of the print order together with the print order information. In the case of multi-page documents, the worksheet, rather than containing an image of the document will contain the descriptive attributes of the document, such as the number of pages, the format, etc. The worksheet may be used by a number of individuals in the printing and finishing process to complete the print order. For instance, in the case of a business card, if the PWG has grouped more than one print order for business cards into a plate information file, an operator, upon printing of the plate information file, then uses the worksheet corresponding to a print order to identify the printed cards corresponding to the print order. The PWG transmits a worksheet file, containing information for printing of the worksheet, and the plate information file to the ISS for storage, and subsequent transmittal to appropriate PPMS server 932.

The PWG 930 provides an advanced merge engine which generates Postscript type files from a combination of the print order and image information and predefined templates. For example, the merge engine generates Postscript files from tab and cover information. The merge engine also merges information together with templates to create the Printer Ready Postscript (PRP) files for use by the printers.

The PPMS server 932 is preferably implemented as a general purpose programmed computer executing the IBM OS/2 operating system. The PPMS server 932 receives image information in the form of the plate information file and the worksheet from the Image Storage 924. Communications between the PPMS server and the ISS is preferably implemented in accordance with the LU6.2 protocol. The PPMS Server then transmits the necessary information to the Prepress module 934.

The Prepress module 934 performs color conversion trapping, grouping, imposition, color separation, validates image content and creates tab and cover sheets. Image content validation is preferably performed by Adobe Acrobat available from the Adobe Corporation. The generation of printer ready Postscript files is preferably performed by Adobe Presswise/Open also available from the Adobe Corporation. Once an image customized by the Prepress module 934 it is transmitted to queue module 936 which stores the images. Preferably the queue module 936 groups print orders to optimize the tasks performed by a printer operator. For example, print orders utilizing like paper are grouped together to minimize changes of paper in a printer. Upon completion of printing, each print order is then finished, which, for example, may involve cutting of the printed paper to the size of the document specified in the print order. Finishing may also involve binding operations to be performed, either manually or with a certain level of automation. Once a print order is finished it is then packaged and shipped to the customer in accordance with the shipping instructions specified by the customer.

It is to be understood that the specific arrangement which has been described is merely illustrative of one application of the principles of the invention. Numerous modifications may be made by those skilled in the art without departing from the true spirit and scope of the invention.

## Claims

1. Apparatus, operable on a data processing system, for causing the printing at a remote printing facility of a document stored on said data processing system, the apparatus comprising:
means for providing printing option information to a user of said data processing system and for storing user selection of printing options;
means, responsive to said user selected printing options and to said document format information, for generating cost information indicative of cost to said user of printing said document at said remote printing facility;
means for providing payment options to said user, said payment options including an option to pay for printing of said document by a credit card;
means, responsive to user entry of credit card information, for obtaining authorization information from a remotely located authorization facility, by causing transmission of said credit card information by a data transmission means to said authorization facility and by receiving said authorization information from a data transmission means;
means, responsive to said document, for generating a transmission file which includes said document and said user selected printing options; and
means for causing said transmission file to be transmitted over a telephone line to said printing facility.

2. Apparatus as set forth in claim 1 wherein said means for providing printing option information to a user of said data processing system and for storing user selection of printing options comprises:
means, responsive to paper type information stored on said data processor, for providing a plurality paper type options and for responding to user selection of a paper type option for storing said selected paper type option;
means, responsive to paper color information stored on said data processor, for providing a plurality paper color options and for responding to user selection of a paper color option for storing said selected paper color option;
means, responsive to binder type information stored on said data processor, for providing a plurality binder type options and for responding to user selection of a binder type option for storing said selected binder type option;
means, responsive to binder color information stored on said data processor, for providing a plurality binder color options and for responding to user selection of a binder color option for storing said selected binder color option; and
means for detecting the presence of tabs in said document and for responding to the presence of tabs in said document by storing the location of said tabs in said document.

3. Apparatus as set forth in claim 1 wherein said means for generating cost information indicative of cost to said user of printing said document at said remote printing facility comprises:
means, responsive to said user selected printing options and to said document format information for generating pre-tax cost data as a function of cost information stored on said data processor;
means, responsive to tax information stored on said data processor and to said pre-tax cost data, for generating final cost data, which is indicative of cost to said user of printing said document at said remote printing facility;
means responsive to generation of said final cost data for displaying said final cost data for review by a user of said data processing system; and
means, responsive to a user command, for causing printing of said final cost data by a printer which is located locally to the data processor.

4. A printing system comprising a user terminal, a printing facility at a location remote from said user terminal, and a communications link for transmitting data between said user terminal and said printing facility,
said user terminal comprising a programmable processor, a memory system for storing programs executable by said processor, and data files manipulated by said programs, said programs comprising, in combination:
one or more application programs for producing application output data files containing data specifying the visual content of a work to be printed, and
a printing job control program comprising, in combination:
means for accepting order specification data from a user specifying the manner in which one or more of said application output data files is to be printed by said printing facility,
means for accepting shipping specification data from the user which designates a method of shipping said work from said printing facility to a specified destination,
means for calculating job cost values in response to said order specification data,
means for displaying print job cost information to the user, including means for calculating said print job cost information based on said specification data,
means for accepting a job authorization command from said user,
means responsive to said job authorization command for establishing connection from said user terminal to said printing facility via said communications link,
means for transmitting to said printing facility a print job approval request, said print job approval request including said print job cost information and data identifying said user,
means for accepting a print job approval from said printing facility via said communication link, and
means responsive to said print job approval for transmitting from said user terminal to said printing facility a message having a predetermined format containing said order specification data, said shipping specification data and said selected ones of said application output data files.

5. A printing system as set forth in claim 4 wherein said means for accepting order specification data comprises, in combination,
means for accepting from the user a specification of the desired number of copies of said work,
means for displaying to the user a plurality of sets of established options, and
means for accepting from the user a designation of desired options selected from said sets.

6. A printing system as set forth in claim 5 wherein said sets comprise, in combination,
a set of predetermined available bindings for said work,
a set of predetermined available papers types upon which said work may be printed and, for at least selected ones of said paper types, a set of available paper colors.

7. A printing system as set forth in claim 6 further comprising means for accepting from the user a specification of tab inserts to be incorporated into said work.

8. A printing system as set forth in claim 4 wherein said printing job control program further comprises:
means responsive to said job authorization command for storing said message having a predetermined format containing said order specification data, said shipping specification data and selected ones of said application output data files to a magnetic data diskette.
